(19) **Europäisches Patentamt European Patent Office Office européen des brevets**

(11) **EP 4 483 138 B1**

(12) **FASCICULE DE BREVET EUROPEEN**

(45) Date de publication et mention de la délivrance du brevet:
**31.12.2025 Bulletin 2026/01**

(21) Numéro de dépôt: **23706709.5**

(22) Date de dépôt: **16.02.2023**

(51) Classification Internationale des Brevets (IPC):
**G01B 11/30** (2006.01)

(52) Classification Coopérative des Brevets (CPC):
**G01B 11/303**; G01B 2210/56

(86) Numéro de dépôt international:
**PCT/EP2023/053887**

(87) Numéro de publication internationale:
**WO 2023/156519 (24.08.2023 Gazette 2023/34)**

(54) **SYSTÈMES ET PROCÉDÉS D'ANALYSE DE LA QUALITÉ DE SURFACE D'UNE LAME À FACES PARALLÈLES**

SYSTEME UND VERFAHREN ZUR ANALYSE DER OBERFLÄCHENQUALITÄT EINES SUBSTRATS MIT PARALLELEN FLÄCHEN

SYSTEMS AND METHODS FOR ANALYSING THE SURFACE QUALITY OF A SUBSTRATE WITH PARALLEL FACES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.02.2022 FR 2201527**

(43) Date de publication de la demande:
**01.01.2025 Bulletin 2025/01**

(73) Titulaire: **Imagine Optic**
**91400 Orsay (FR)**

(72) Inventeurs:
• **LEVECQ, Xavier**
**91190 Gif sur Yvette (FR)**
• **LEFAUDEUX, Nicolas**
**91470 Forges les Bains (FR)**

(74) Mandataire: **Osha BWB**
**2, rue de la Paix**
**75002 Paris (FR)**

(56) Documents cités:
**WO-A1-2011/042674**

• **FOREST CRAIG R. ET AL: "Metrology of thin transparent optics using Shack-Hartmann wavefront sensing", OPTICAL ENGINEERING, vol. 43, no. 3, 1 March 2004 (2004-03-01), BELLINGHAM, pages 742 - 753, XP055959487, ISSN: 0091-3286, DOI: 10.1117/1.1645256**
• **WANG XIN ET AL: "Multi-layer surface profiling using gated wavefront sensing", PROCEEDINGS OF SPIE, IEEE, US, vol. 9442, 7 January 2015 (2015-01-07), pages 94421K - 94421K, XP060045097, ISBN: 978-1-62841-730-2, DOI: 10.1117/12.2176174**
• **YANG PAO-KENG ET AL: "Characterizing the surface fluctuation of an epitaxial wafer by using a Shack-Hartmann wave-front sensor", PROCEEDINGS OF SPIE; [PROCEEDINGS OF SPIE ISSN 0277-786X VOLUME 10524], SPIE, US, vol. 10373, 23 August 2017 (2017-08-23), pages 103730W - 103730W, XP060096553, ISBN: 978-1-5106-1533-5, DOI: 10.1117/12.2273276**

## Description

### Domaine technique de l'invention

La présente description concerne des systèmes et procédés d'analyse de la qualité de surface d'une lame à faces parallèles et concerne plus particulièrement l'analyse des déformations des surfaces d'une telle lame.

### Etat de la technique

La topographie de surfaces de matériaux à faces parallèles, appelés simplement « lames » dans la présente description, présente un intérêt dans de nombreux domaines, ces matériaux pouvant être, par exemple, des substrats en verre pour les disques durs d'ordinateurs, des photo-masques et plaquettes de silicium (ou « wafers ») dans l'industrie des semi-conducteurs, des écrans plats et verres d'affichage pour les dispositifs mobiles, des hublots, des optiques de télescopes à rayons X, des filtres optiques, des lames dichroïques, des dômes de protection, etc.

Il est en effet important de pouvoir étudier et quantifier d'éventuelles déformations des surfaces de telles lames, ces déformations pouvant générer des biais dans les systèmes les mettant en œuvre.

Des méthodes optiques sans contact sont connues pour l'analyse de la qualité de surface d'une lame. Une difficulté rencontrée dans la plupart des méthodes dans l'analyse de la qualité de surface d'une face de la lame est la contribution de la réflexion par l'autre face (face arrière), notamment dans le cas de lames transparentes dans la bande spectrale de la source optique utilisée pour la mesure.

Différentes méthodes de métrologie pour analyser la qualité de surface de matériaux minces et transparents permettant de s'affranchir de l'effet de la réflexion sur la face arrière, sont décrites par exemple dans l'article de revue « Metrology of thin transparent optics using Shack-Hartmann wavefront sensing » de Craig R. Forest *et al.* [Réf. 1].

Il est connu notamment d'appliquer un revêtement avec un indice adapté en face arrière pour supprimer la réflexion par la face arrière ou d'appliquer un revêtement très réflectif sur la face avant, mais ces procédés nécessitent des opérations d'application de revêtements et de nettoyage et peuvent introduire eux-mêmes des déformations de surface. Des méthodes d'interférométrie à décalage de phase sont également décrites dans [Réf. 1] dans lesquelles on utilise une source de lumière blanche ou à faible cohérence pour éviter des interférences parasites dues aux réflexions sur les deux faces de la lame. Ces méthodes, utilisant par exemple des interféromètres de Michelson, sont complexes à mettre en œuvre et limitées à des lames dont les déformations sont bien inférieures à l'épaisseur.

Comme expliqué dans [Réf. 1], il est également possible d'envisager des méthodes d'interférométrie à décalage de phase utilisant des sources laser accordables en fréquence. Par exemple, des mesures d'interférences peuvent être faites sur trois surfaces (une surface de référence, la face avant et la face arrière de la lame) séquentiellement à deux longueurs d'onde différentes, puis de nouvelles mesures d'interférences sont effectuées toujours aux deux longueurs d'onde mais en retournant la lame de telle sorte que la face arrière fasse face à la surface de référence. Il est alors possible de séparer mathématiquement les contributions des interférences des surfaces planes et parallèles du matériau et notamment la contribution résultant de l'interférence entre la face avant et la surface de référence. Cependant, cette méthode nécessite une manipulation de l'échantillon, qui a besoin d'être retourné afin d'effectuer les deux séries de mesure, ce qui peut être gênant avec des matériaux fragiles et facilement déformables. Plus généralement, des méthodes sont connues qui utilisent des sources à variation de fréquence et dans lesquelles une analyse de Fourier du spectre de signal d'interférence permet d'extraire les profils des différentes faces. Toutes ces méthodes nécessitent de nombreuses acquisitions ce qui les rend très sensibles à l'environnement, notamment aux vibrations.

La [Réf. 1] décrit également des méthodes permettant la séparation spatiale des réflexions de la face avant et de la face arrière, ce qui permet de bloquer les réflexions de la face arrière au moyen d'un obturateur. Il s'agit par exemple de méthodes interférométriques à éclairage oblique ou sphérique (ou *« grazing incidence interferometry »)*. Ces méthodes sont cependant très sensibles à l'alignement des composants.

Outre les méthodes basées sur l'interférométrie, la [Réf. 1] introduit une méthode d'analyse de la qualité optique d'une face d'un matériau mince et transparent utilisant un analyseur de front d'onde Shack-Hartmann.

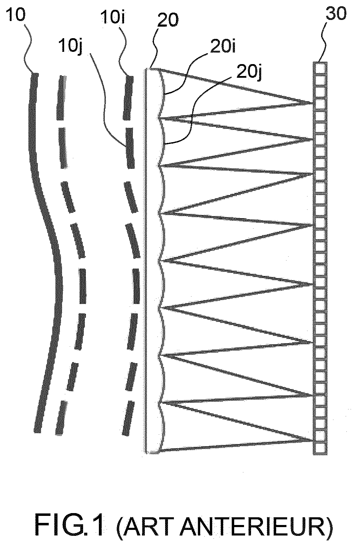

Comme illustré sur la FIG. 1 extraite de la [Réf. 1], un analyseur de front d'onde Shack-Hartmann comprend une matrice de microlentilles 20 et une matrice de détecteurs élémentaires 30. Si un front d'onde de référence, par exemple un front d'onde de référence plan, est incident sur la matrice de microlentilles 20, chaque microlentille (20i, 20j, ...) intercepte et focalise une partie du front d'onde sans déflexion, ce qui résulte en un arrangement régulier des barycentres des taches de focalisation sur la matrice de détecteurs élémentaires 30. Si au contraire, comme cela est visible sur la FIG. 1, un front d'onde 10 est incident avec une déformation par rapport au front d'onde de référence plan, les microlentilles (20i, 20j, ...) interceptent des parties (10i, 10j, ...) du front d'onde qui présentent localement des pentes non nulles. Il s'ensuit un déplacement du barycentre des taches de focalisation sur la matrice de détecteurs élémentaires 30. A partir du signal de mesure ainsi déterminé et correspondant à une matrice bidimensionnelle des déplacements, on peut déterminer une matrice des pentes locales du front d'onde et en déduire une matrice des valeurs du front d'onde mesurées au niveau de chaque microlentille par rapport au front d'onde de référence, par exemple par intégration numérique des valeurs des pentes locales. Les déformations locales de la face que l'on analyse étant directement proportionnelles aux déformations locales du front d'onde, il est ainsi possible de déterminer les déformations à partir du signal de mesure du Shack Hartmann.

Par rapport aux techniques d'interférométrie décrites ci-dessus, les méthodes de métrologie utilisant un analyseur de front d'onde Shack-Hartmann, et plus généralement un dispositif mettant en œuvre un analyseur de front d'onde qui réalise une analyse directe du front d'onde, permettent notamment d'utiliser des sources de lumière temporellement incohérentes ou à faible cohérence temporelle généralement moins chères que des lasers, la possibilité de travailler en environnement peu contrôlé et sont des solutions moins couteuses.

Cependant, comme expliqué dans [Réf. 1], la réflexion sur la face arrière peut perturber la mesure de la qualité de surface de la face avant, notamment si l'on travaille avec des sources lumineuses comprenant des longueurs d'onde auxquelles le matériau est au moins partiellement transparent. Il est ainsi suggéré de mettre en place des filtres spectraux pour le filtrage de toute longueur d'onde dans le domaine de transparence du matériau ou d'utiliser des sources dont la longueur d'onde n'est pas transmise par le matériau de la lame à analyser.

La demande de brevet publiée WO 2004/068088 [Réf. 2] décrit l'utilisation de deux analyseurs de front d'onde, en l'occurrence des interféromètres à décalage latéral (ou *« Shearing interferometers »),* pour des mesures à la fois en réflexion et en transmission de la lame dont on veut mesurer les défauts de surface. De tels interféromètres à décalage latéral permettent comme l'analyseur de front d'onde Shack-Hartmann une mesure directe du front d'onde : ils ne mettent pas en œuvre des interférences avec un faisceau de référence et sont sensibles à la dérivée première du front d'onde. La mesure en réflexion donne une information relative à la topologie d'une face et la mesure en transmission donne une information relative à la variation d'épaisseur de la lame. En combinant les deux mesures on peut retrouver des informations relatives à la topologie des deux faces de la lame. Cette méthode fonctionne bien mais la mise en œuvre est compliquée car la mesure en réflexion d'une face de la lame ne doit pas être perturbée par la réflexion par la deuxième face. Pour ce faire, il est proposé d'utiliser, pour cette mesure en réflexion, une longueur d'onde pour laquelle le matériau de la lame est opaque, c'est-à-dire absorbant. Cela oblige à choisir une longueur d'onde par exemple dans l'UV ou dans l'infrarouge lointain, ce qui nécessite des capteurs et des optiques spécifiques, entraînant des contraintes en termes de choix des matériaux et de coût.

Un objet de la présente description est de proposer des systèmes et procédés d'analyse de la qualité de surface des deux faces d'une lame à faces parallèles utilisant des analyseurs de front d'onde qui permettent l'utilisation d'une ou plusieurs sources lumineuses à faible cohérence temporelle et qui ne présentent pas les contraintes des dispositifs et méthodes décrites dans la [Réf.2].

## Résumé de l'invention

Dans la présente description, le terme « comprendre » signifie la même chose que « inclure » ou « contenir », et est inclusif ou ouvert et n'exclut pas d'autres éléments non décrits ou représentés.

En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, la présente description concerne un procédé d'analyse de la qualité de surface d'une lame à faces parallèles, comprenant :

- l'émission par au moins une première source lumineuse de moyens d'émission, d'au moins un premier faisceau lumineux à faible cohérence temporelle, ledit au moins un premier faisceau lumineux étant incident sur ladite lame, ladite lame étant au moins partiellement transparente à au moins une longueur d'onde dudit premier faisceau lumineux incident ;
- la réception par au moins un premier analyseur de front d'onde de moyens d'analyse de front d'onde, d'au moins un premier faisceau de réflexion et un deuxième faisceau de réflexion, ledit premier faisceau de réflexion résultant de la réflexion dudit au moins un premier faisceau lumineux par une première face de la lame et ledit deuxième faisceau de réflexion résultant d'une première transmission de la lame par ledit premier faisceau lumineux puis d'une réflexion par une deuxième face de la lame suivi d'une deuxième transmission de la lame, afin de générer au moins un premier signal de mesure caractéristique d'une combinaison des fronts d'onde desdits premier et deuxième faisceaux de réflexion ;
- la réception par lesdits moyens d'analyse de front d'onde, d'au moins un premier faisceau de transmission résultant d'au moins une première transmission de la lame par un deuxième faisceau lumineux émis par lesdits moyens d'émission, afin de générer un deuxième signal de mesure caractéristique du front d'onde dudit faisceau de transmission;
- le calcul, à partir dudit au moins un premier signal de mesure et dudit deuxième signal de mesure, d'au moins un premier signal représentatif d'une déformation de ladite première face de la lame par rapport à une première surface de référence et d'au moins un deuxième signal représentatif d'une déformation de la deuxième face de la lame par rapport à une deuxième surface de référence.

Dans la présente description, on appelle « lame à faces parallèles » un élément optique avec une première face et une deuxième face, la distance entre les deux faces, mesurée selon un axe perpendiculaire aux faces, étant sensiblement constante sur l'ensemble de l'élément optique, c'est-à-dire présentant une variation d'épaisseur inférieure à +/- 10%. Une lame à faces parallèles peut être plane, auquel cas un angle entre lesdites faces est inférieur à environ 5 minutes d'arc. D'autres formes de lames à faces parallèles peuvent être considérées dans la présente description, par exemple des lames courbes comme par exemple des dômes de protection.

Dans la présente description, un faisceau lumineux à faible cohérence temporelle est un faisceau lumineux dont la cohérence temporelle est suffisamment faible pour s'affranchir d'éventuels effets d'interférences entre les faisceaux de réflexion sur les faces de la lame, de tels effets d'interférence pouvant gêner la mesure. Pour ce faire, il est avantageux en pratique que la longueur de cohérence temporelle du premier faisceau lumineux soit inférieure à environ deux fois l'épaisseur optique de la lame à faces parallèles que l'on cherche à analyser, l'épaisseur optique de la lame étant la multiplication de l'épaisseur de la lame par l'indice de réfraction moyen du matériau dont est formée celle-ci. La cohérence temporelle du premier faisceau lumineux est inférieure ou égale à environ 100 $\mu$m, avantageusement inférieure ou égale à environ 10 $\mu$m. Ainsi, par exemple, avec un premier faisceau lumineux dont la cohérence temporelle est inférieure ou égale à environ 10 $\mu$m, on pourra analyser les surfaces de lames très fines, c'est-à-dire de quelques dizaines de microns d'épaisseur. Il est à noter que la longueur de cohérence temporelle du premier faisceau lumineux engendre une épaisseur minimale pour les lames à analyser mais n'engendre pas de limitation supérieure. Avec la même source lumineuse dont la cohérence temporelle est inférieure ou égale à environ 10 $\mu$m par exemple, il sera possible d'analyser également des lames de plusieurs dizaines de centimètres d'épaisseur.

Selon un ou plusieurs exemples de réalisation, ledit au moins un premier faisceau lumineux et ledit deuxième faisceaux lumineux sont spatialement cohérents.

Dans le cas de l'utilisation d'un analyseur de front d'onde Shack-Hartmann par exemple, les premier et deuxième faisceaux lumineux présentent une cohérence spatiale suffisante pour que les faisceaux de réflexion ou de transmission résultants, incidents sur la matrice de microlentilles, génèrent des taches de focalisation dont la taille est inférieure à la taille de la microlentille qui la génère.

De façon générale, il est connu que la précision des analyseurs de front d'onde diminue lorsque la cohérence spatiale de la source qui génère les faisceaux lumineux diminue elle aussi, c'est-à-dire que la taille angulaire de la source augmente. De ce fait, la cohérence spatiale des faisceaux lumineux doit être suffisante pour permettre une mesure au moyen de l'analyseur avec une précision compatible avec les besoins de l'application. Par exemple, comme expliqué précédemment, pour les capteurs de type Shack Hartmann, il est connu que la précision de la mesure est peu impactée si la taille angulaire de la source d'émission des faisceaux lumineux ramenée dans l'espace de l'analyseur est inférieure à l'angle de diffraction d'une microlentille.

Selon un ou plusieurs exemples de réalisation, ladite au moins une première source lumineuse pour l'émission dudit au moins un premier faisceau lumineux à faible cohérence temporelle est une source choisie parmi : une lampe à incandescence, une diode électroluminescente ou LED (acronyme de « Light Emitting Diode »), une diode super luminescente ou SLED (acronyme de « Super Luminscent Diode »), qui peut être fibrée dans un fibre mono mode, une diode laser utilisée sous son seuil de génération de l'effet laser, qui peut être fibrée dans une fibre mono mode.

Dans la présente description, la lame est dite au moins partiellement transparente à au moins une longueur d'onde d'un faisceau qui la traverse, lorsque la transmission dudit faisceau, à ladite longueur d'onde, est au moins égale à 10%, avantageusement au moins égale à 30%.

Dans la présente description, contrairement aux procédés décrits dans l'état de l'art, par exemple le procédé décrit dans [Réf. 2], on s'assure ainsi que le premier faisceau lumineux incident sur la lame à analyser est au moins partiellement transmis par la lame, ce qui permet d'analyser les fronts d'onde combinés des faisceaux réfléchis par la première face et par la deuxième face de la lame grâce audit au moins un premier analyseur de front d'onde des moyens d'analyse de front d'onde.

Dans la présente description, on appelle « front d'onde » d'un faisceau lumineux une surface d'égale phase de l'onde électromagnétique qui constitue ledit faisceau. Ainsi, si l'on illumine par exemple une surface plane d'une lame sans défaut avec une onde de référence plane, le front d'onde du faisceau réfléchi est également plan. Si la surface présente des déformations locales par rapport à une surface de référence plane, le front d'onde du faisceau réfléchi est déformé par rapport au front d'onde de référence plan. Dans la présente description, une analyse d'un front d'onde est ainsi une mesure des déformations dudit front d'onde par rapport à un front d'onde de référence, par exemple mais non nécessairement, un front d'onde plan. Par exemple, dans le cas d'analyse d'une lame courbe, le front d'onde de référence pourrait être un front d'onde sphérique.

Ainsi, dans la présente description, le premier signal de mesure, le deuxième signal de mesure et les signaux caractéristiques des déformations des première et deuxième surfaces de la lame sont des signaux matriciels, c'est à dire composés de matrices bidimensionnelles de valeurs.

Dans la présente description, on appelle « analyseur de front d'onde » un dispositif permettant une mesure directe du front d'onde d'un faisceau à analyser, par opposition à des techniques interférométriques utilisant l'interférence du faisceau à analyser avec un faisceau de référence. Un tel dispositif permet, en général, la détermination des pentes locales du front d'onde (c'est-à-dire les dérivées premières du front d'onde) et sont généralement basées sur une analyse de la variation de l'angle du trajet de rayons lumineux à l'aide d'un senseur de front d'onde comprenant un ensemble d'un ou plusieurs éléments optiques et un détecteur généralement bidimensionnel.

Selon un ou plusieurs exemples de réalisation, ledit au moins un premier analyseur de front d'onde des moyens d'analyse du front d'onde est choisi parmi : un analyseur de front d'onde Hartmann et Shack Hartmann, tel que décrit par exemple dans [Réf. 3], un interféromètre par décalage latéral, tel que décrit par exemple dans [Réf. 4], un déflectomètre par image de moiré, tel que décrit par exemple dans [Réf. 5], un dispositif basé sur la méthode de Schlieren, tel que décrit par exemple dans [Réf. 6].

Selon un ou plusieurs exemples de réalisation, ledit au moins un premier faisceau lumineux est incident sur ladite lame de façon sensiblement perpendiculaire à ladite lame. Bien qu'il soit possible de concevoir des agencements dans lesquels le premier faisceau lumineux est incident sur la lame avec une inclinaison par rapport à la normale, une incidence sensiblement normale est préférée car elle simplifie le montage optique et permet de ne pas introduire de décalage latéral entre le premier faisceau de réflexion et le deuxième faisceau de réflexion, notamment dans le cas de lames épaisses.

Selon un ou plusieurs exemples de réalisation, ledit deuxième faisceau lumineux est incident sur ladite première face de la lame et le procédé comprend en outre, pour la génération du deuxième signal de mesure :

- le positionnement d'un miroir de référence, agencé de façon sensiblement perpendiculaire audit deuxième faisceau lumineux; et dans lequel
- ledit premier faisceau de transmission résulte d'une première transmission de la lame par ledit deuxième faisceau lumineux , d'une réflexion par le miroir de référence et d'une deuxième transmission de la lame par le faisceau réfléchi par le miroir de référence ; et
- ledit premier faisceau de transmission est reçu par ledit premier analyseur de front d'onde des moyens d'analyse de front d'onde.

Le procédé ainsi décrit peut être mis en œuvre avec un seul analyseur de front d'onde et une seule source d'émission lumineuse, le premier faisceau lumineux et le deuxième faisceau lumineux pouvant être émis par la même source lumineuse.

Le miroir de référence pourra être plan dans le cas où l'on cherche à analyser une lame plane à faces parallèles ou courbe, par exemple sphérique, dans le cas où l'on cherche à analyse une lame avec une courbure non nulle.

Selon des exemples de réalisation, le miroir de référence peut être agencé de façon amovible. Dans d'autres exemples de réalisation, il peut être occultable, par exemple au moyen d'un cache ou il peut être orientable, par exemple au moyen d'une rotation motorisée ou non, de façon à ce que le faisceau réfléchi par ce dernier ne soit pas reçu par les moyens d'analyse de front d'onde. Dans les deux cas, cela permet d'obtenir le premier signal de mesure caractéristique d'une combinaison des fronts d'onde desdits premier et deuxième faisceaux de réflexion, dans le cas où le miroir n'est pas présent ou est occulté, ou est tourné, et d'obtenir le deuxième signal de mesure caractéristique du front d'onde dudit faisceau de transmission lorsque le miroir de référence est présent et non occulté ou non tourné.

Selon un ou plusieurs exemples de réalisation :

- ledit deuxième faisceau lumineux est incident sur ladite première face de la lame ;
- ledit premier faisceau de transmission résulte d'une première transmission de la lame par ledit deuxième faisceau lumineux ; et
- ledit premier faisceau de transmission est reçu par un deuxième analyseur de front d'onde des moyens d'analyse de front d'onde, distinct du premier analyseur de front d'onde.

Le procédé ainsi décrit est mis en œuvre avec des moyens d'analyse de front d'onde comprenant deux analyseurs de front d'onde distincts, qui peuvent être de nature identique ou différente. Ledit premier et deuxième faisceau lumineux pouvant être émis simultanément par la même source lumineuse, il permet d'obtenir simultanément le premier signal de mesure caractéristique d'une combinaison des fronts d'onde desdits premier et deuxième faisceaux de réflexion et le deuxième signal de mesure caractéristique du front d'onde dudit faisceau de transmission, sans manipulation d'un miroir de référence. Selon un ou plusieurs exemples de réalisation :

- ledit deuxième faisceau lumineux est émis par une deuxième source lumineuse des moyens d'émission distincte de la première source, et est incident sur ladite deuxième face de la lame ;
- ledit premier faisceau de transmission résulte d'une première transmission de la lame par ledit deuxième faisceau lumineux ; et
- ledit premier faisceau de transmission est reçu par ledit premier analyseur de front d'onde des moyens d'analyse de mesure.

Le procédé ainsi décrit est mis en œuvre avec des moyens d'émission comprenant deux sources d'émission distinctes, les sources d'émission pouvant être de nature identique ou différente. Il permet d'obtenir le premier signal de mesure caractéristique d'une combinaison des fronts d'onde desdits premier et deuxième faisceaux de réflexion et le deuxième signal de mesure caractéristique du front d'onde dudit faisceau de transmission, sans manipulation d'un miroir de référence.

Ainsi, dans le cas de sources d'émission de nature différente, selon un ou plusieurs exemples de réalisation, ledit premier faisceau lumineux émis par ladite première source lumineuse et ledit deuxième faisceau lumineux émis par ladite deuxième source lumineuse comprennent une longueur d'onde et/ou une polarisation différente. Le procédé peut alors comprendre en outre :

- la réception par un deuxième analyseur de front d'onde des moyens d'analyse de front d'onde, distinct du premier analyseur de front d'onde, d'un deuxième faisceau de transmission résultant d'une première transmission de la lame par ledit premier faisceau lumineux; afin de générer un troisième signal de mesure caractéristique du front d'onde dudit deuxième faisceau de transmission ; et
- une comparaison dudit deuxième signal de mesure caractéristique du front d'onde dudit premier faisceau de transmission et dudit troisième signal de mesure caractéristique du front d'onde dudit deuxième faisceau de transmission afin de générer un signal caractéristique des variations de l'indice de réfraction au sein de la lame.

Selon un deuxième aspect, la présente description concerne des systèmes d'analyse de la qualité de surface d'une lame à faces parallèles pour la mise en œuvre des procédés d'analyse selon le premier aspect.

Ainsi, le système selon le deuxième aspect comprend :

- au moins un premier support configuré pour recevoir la lame à analyser;
- des moyens d'émission comprenant au moins une première source lumineuse pour l'émission d'au moins un premier faisceau lumineux à faible cohérence temporelle, et présentant au moins une longueur d'onde à laquelle ladite lame est au moins partiellement transparente, lesdits moyens d'émission étant configurés pour qu'en opération, ledit au moins un premier faisceau lumineux soit incident sur ladite lame;
- des moyens d'analyse de front d'onde comprenant au moins un premier analyseur de front d'onde et configurés, en opération, pour :

  - recevoir, sur une surface d'analyse dudit premier analyseur de front d'onde, au moins un premier faisceau de réflexion et un deuxième faisceau de réflexion, ledit premier faisceau de réflexion résultant de la réflexion dudit au moins un premier faisceau lumineux par une première face de la lame et ledit deuxième faisceau de réflexion résultant d'une première transmission de la lame par ledit premier faisceau lumineux puis d'une réflexion par une deuxième face de la lame suivi d'une seconde transmission de la lame, afin de générer un premier signal de mesure caractéristique d'une combinaison des fronts d'onde desdits premier et deuxième faisceaux de réflexion ;
  - recevoir, par lesdits moyens d'analyse de front d'onde, au moins un premier faisceau de transmission résultant d'au moins une première transmission de la lame par un deuxième faisceau lumineux émis par lesdits moyens d'émission, afin de générer un deuxième signal de mesure caractéristique du front d'onde dudit faisceau de transmission ;
  - une unité de traitement configurée pour calculer, à partir dudit premier signal de mesure et dudit deuxième signal de mesure, au moins un premier signal représentatif d'une déformation de ladite première face de la lame par rapport à une première surface de référence et au moins un deuxième signal représentatif d'une déformation de la deuxième face de la lame par rapport à une deuxième surface de référence.

Selon un ou plusieurs exemples de réalisation, lesdits moyens d'émission sont configurés pour qu'en opération, ledit au moins un premier faisceau soit incident sur ladite lame de façon sensiblement perpendiculaire à ladite lame.

Selon un ou plusieurs exemples de réalisation, ladite surface d'analyse dudit premier analyseur de front d'onde est conjuguée optiquement avec la lame à analyser.

Selon un ou plusieurs exemples de réalisation, le système comprend en outre:

- un deuxième support configuré pour recevoir un miroir de référence, le miroir de référence en opération étant agencé de façon sensiblement perpendiculaire audit deuxième faisceau lumineux; et dans lequel, en opération:
- ledit premier faisceau de transmission résulte d'une première transmission de la lame par ledit au moins un deuxième faisceau lumineux, d'une réflexion par le miroir de référence et d'une deuxième transmission de la lame par le faisceau réfléchi par le miroir de référence ; et

- lesdits premier et deuxième faisceaux de réflexion et ledit premier faisceau de transmission sont reçus par ledit premier analyseur de front d'onde des moyens d'analyse de front d'onde.

Selon un ou plusieurs exemples de réalisation, les moyens d'analyse de front d'onde comprennent un deuxième analyseur de front d'onde, distinct du premier analyseur de front d'onde, et :

- lesdits moyens d'émission sont configurés pour qu'en opération, ledit deuxième faisceau lumineux soit incident sur ladite première face de la lame, ledit premier faisceau de transmission résultant d'une première transmission de la lame par ledit deuxième faisceau lumineux;
- lesdits moyens d'analyse de front d'onde sont configurés pour qu'en opération, ledit premier faisceau de transmission est reçu par ledit deuxième analyseur de front d'onde des moyens d'analyse de front d'onde.

Selon un ou plusieurs exemples de réalisation, ledit premier analyseur de front d'onde et/ou ledit deuxième analyseur de front d'onde des moyens d'analyse du front d'onde est choisi parmi : un analyseur de front d'onde Hartmann et Shack Hartmann, tel que décrit par exemple dans [Réf. 3], un interféromètre par décalage latéral, tel que décrit par exemple dans [Réf. 4], un déflectomètre par image de moiré, tel que décrit par exemple dans [Réf. 5], un dispositif basé sur la méthode de Schlieren, tel que décrit par exemple dans [Réf. 6].

## Brève description des figures

D'autres avantages et caractéristiques de l'invention apparaîtront à la lecture de la description, illustrée par les figures suivantes :

[Fig. 1], déjà décrite, un schéma illustrant le principe d'un analyseur de type Shack Hartmann selon l'état de l'art.
[Fig. 2A], un schéma illustrant une première étape d'un exemple de procédé d'analyse de la qualité de surface d'une lame selon la présente description, au moyen d'un premier exemple d'un système d'analyse de la qualité de surface d'une lame selon la présente description.
[Fig. 2B], un schéma illustrant une deuxième étape d'un exemple de procédé d'analyse de la qualité de surface d'une lame selon la présente description, au moyen du système d'analyse de la qualité de surface d'une lame illustré sur la Fig. 2A.
[Fig. 3A], un schéma illustrant la mesure d'un signal caractéristique d'une combinaison des fronts d'onde des premier et deuxième faisceaux de réflexion avec un analyseur de type Shack-Hartmann, dans une étape d'un procédé d'analyse de la qualité de surface d'une lame selon la présente description.
[Fig. 3B], un schéma illustrant plus en détails la mesure illustrée sur la Fig. 3A.
[Fig. 4A], un schéma illustrant un exemple de déformation subie par un front d'onde plan réfléchi par une première face d'une lame, lorsque la première face présente un défaut de surface par rapport à une surface de référence plane.
[Fig. 4B], un schéma illustrant un exemple de déformation subie par un front d'onde plan transmis une première fois par la lame illustrée sur la Fig. 4A puis réfléchie par la deuxième face de la lame puis transmis une seconde fois par la lame, lorsque la deuxième face présente un défaut de surface.
[Fig. 4C], un schéma illustrant un exemple de déformation subie par un front d'onde plan transmis par la lame illustrée sur la Fig. 4B puis réfléchie par un miroir de référence et transmis à nouveau par la lame.
[Fig. 5A], un schéma illustrant une première étape d'un exemple de procédé d'analyse de la qualité de surface d'une lame selon la présente description, au moyen d'un deuxième exemple d'un système d'analyse de la qualité de surface d'une lame selon la présente description, adapté pour l'analyse d'une lame à courbure non nulle.
[Fig. 5B], un schéma illustrant une deuxième étape d'un exemple de procédé d'analyse de la qualité de surface d'une lame selon la présente description, au moyen du système d'analyse de la qualité de surface d'une lame illustré sur la Fig. 5A.
[Fig. 6], un schéma illustrant des étapes d'un exemple de procédé d'analyse de la qualité de surface d'une lame selon la présente description, au moyen d'un troisième exemple d'un système d'analyse de la qualité de surface d'une lame selon la présente description.
[Fig. 7], un schéma illustrant des étapes d'un exemple de procédé d'analyse de la qualité de surface d'une lame selon la présente description, au moyen d'un quatrième exemple d'un système d'analyse de la qualité de surface d'une lame selon la présente description.
[Fig. 8], un schéma illustrant des étapes d'un exemple de procédé d'analyse de la qualité de surface d'une lame selon la présente description, au moyen d'un cinquième exemple d'un système d'analyse de la qualité de surface d'une lame selon la présente description.

[Fig. 9], des images expérimentales représentant des matrices de déformations des faces d'une lame, les images étant obtenues avec un système tel qu'illustré sur les Fig. 2A et Fig. 2B.

[Fig. 10A], un schéma illustrant une première étape d'un exemple de procédé d'analyse de la qualité de surface d'une lame selon la présente description, au moyen d'un sixième exemple d'un système d'analyse de la qualité de surface d'une lame selon la présente description, adapté pour une incidence du premier faisceau lumineux sur la lame avec un angle d'inclinaison.

[Fig. 10B], un schéma illustrant une deuxième étape d'un exemple de procédé d'analyse de la qualité de surface d'une lame selon la présente description, au moyen du système d'analyse de la qualité de surface d'une lame illustré sur la Fig. 10A.

[Fig. 10C], un schéma illustrant des limites dans la mise en œuvre d'un procédé d'analyse de la qualité de surface d'une lame au moyen du système d'analyse de la qualité de surface d'une lame illustré sur la Fig. 10A.

## Description détaillée de l'invention

Sur les figures, les éléments ne sont pas représentés à l'échelle pour une meilleure visibilité.

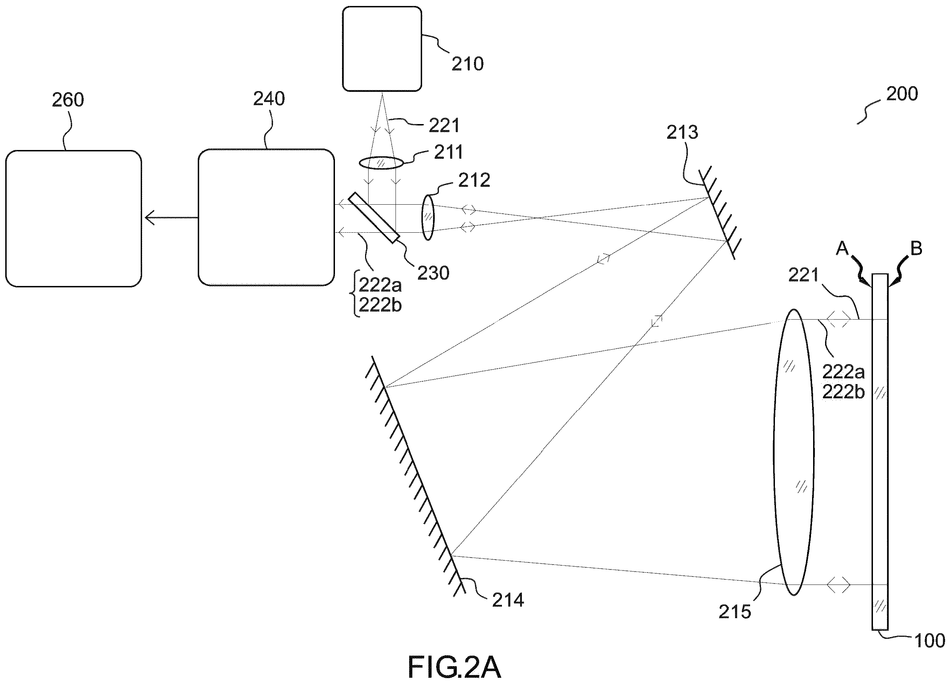

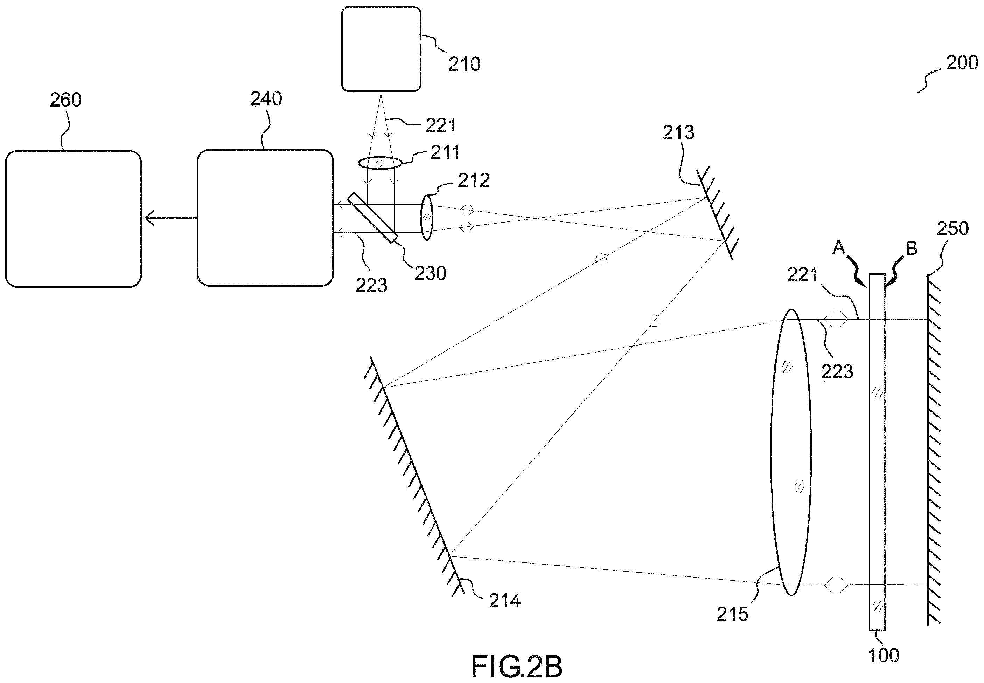

Les Fig. 2A et Fig. 2B illustrent deux étapes pour la mise en œuvre d'un exemple de procédé d'analyse de la qualité de surface d'une lame 100 à faces sensiblement parallèles, au moyen d'un premier exemple d'un système d'analyse de la qualité de surface d'une lame. Dans cet exemple, on cherche à analyser la qualité des deux surfaces d'une lame plane à faces sensiblement parallèles.

Le système d'analyse de la qualité de surface d'une lame illustré sur les Fig. 2A et Fig. 2B et référencé 200, comprend au moins un premier support (non représenté sur les figures), configuré pour recevoir la lame 100 à analyser et un deuxième support (non représenté sur les figures) configuré pour recevoir un miroir 250 (Fig. 2B). Le miroir est agencé par exemple de façon amovible, ou peut être occultable par exemple au moyen d'un cache ou peut être orientable, par exemple au moyen d'une rotation motorisée ou non, de façon à ce qu'un faisceau lumineux incident puis réfléchi par ce dernier ne soit pas reçu par les moyens d'analyse de front d'onde.

Le système 200 comprend en outre des moyens d'émission lumineuse comprenant une source d'émission lumineuse 210 à faible cohérence temporelle, et présentant au moins une longueur d'onde à laquelle la lame 100 est au moins partiellement transparente.

De façon générale, la source d'émission lumineuse 210 peut comprendre une lampe à incandescence, une diode électroluminescente ou LED (acronyme de « Light Emitting Diode »), une diode super luminescente ou SLED (acronyme de « Super Luminescent Diode ») ou encore une diode laser utilisée sous son seuil de génération de l'effet laser. Le choix de la source lumineuse peut être adaptée à la lame que l'on cherche à analyser. Par exemple dans le cas de l'analyse d'un filtre spectral, la source d'émission lumineuse 210 peut comprendre une diode super luminescente (SLED) dont la longueur d'onde est choisie dans la bande spectrale de transmission du filtre interférentiel.

Le système 200 comprend en outre des moyens d'analyse du front d'onde comprenant, dans l'exemple des Fig. 2A et Fig. 2B un analyseur de front d'onde 240, par exemple, mais non limitativement, un analyseur de type Shack-Hartmann.

Le système 200 comprend par ailleurs une unité de traitement 260 configuré pour le traitement de signaux de mesure émis par l'analyseur de front d'onde 240 et peut comprendre une unité d'affichage (non représentée).

De façon générale, une unité de traitement à laquelle il est fait référence dans la présente description peut comprendre une ou plusieurs entités physiques, et se trouver rassemblée dans un ou plusieurs ordinateurs. Lorsque dans la présente description, il est fait référence à des étapes de calcul ou traitement pour la mise en œuvre notamment d'étapes de procédés, il est entendu que chaque étape de calcul ou traitement peut être mis en œuvre par logiciel, hardware, firmware, microcode ou toute combinaison appropriée de ces technologies. Lorsqu'un logiciel est utilisé, chaque étape de calcul ou traitement peut être mise en œuvre par des instructions de programme d'ordinateur ou du code logiciel. Ces instructions peuvent être stockées ou transmises vers un support de stockage lisible par l'unité de traitement et/ou être exécutées par l'unité de traitement afin de mettre en œuvre ces étapes de calcul ou traitement.

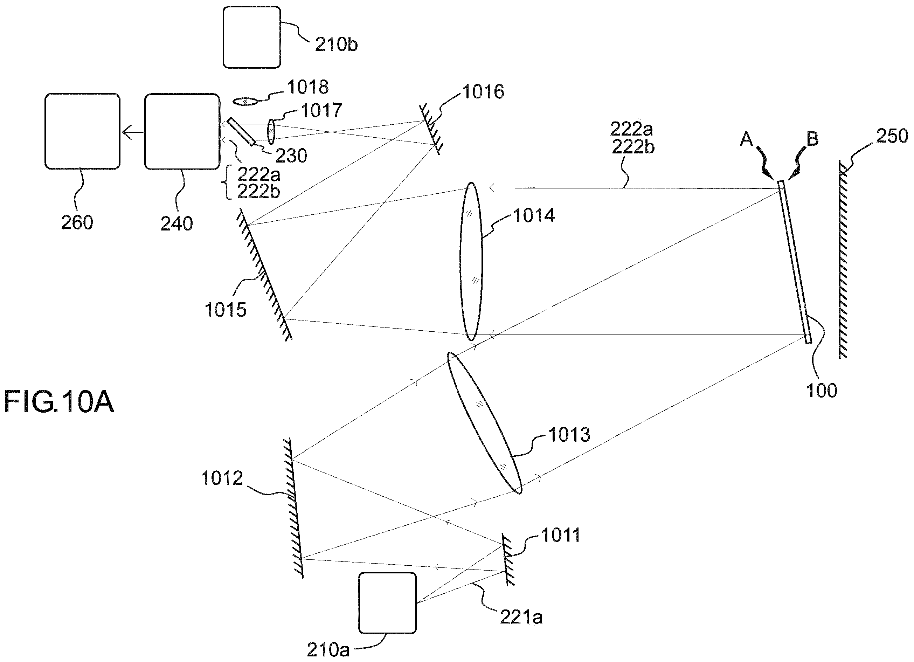

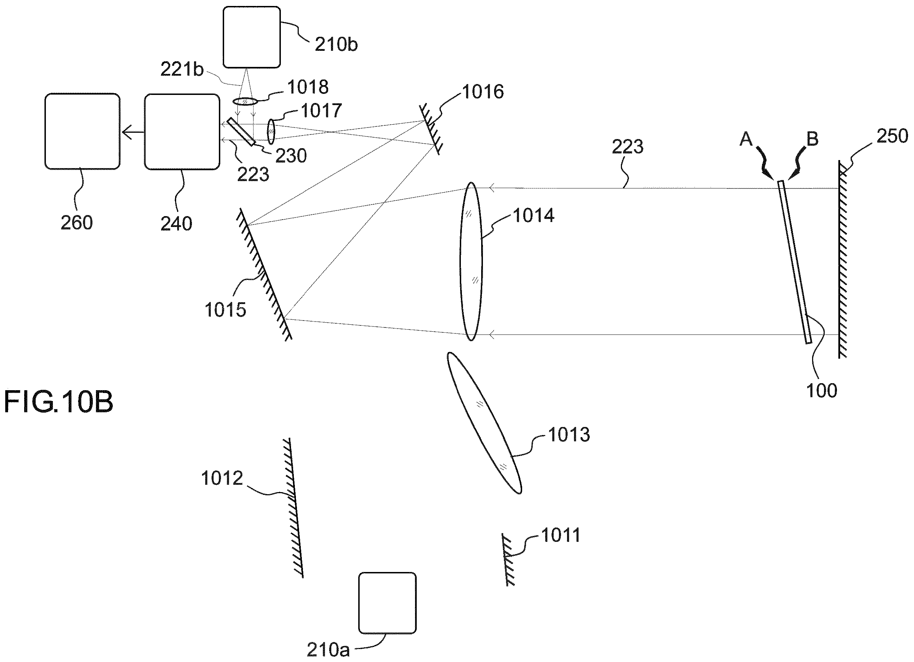

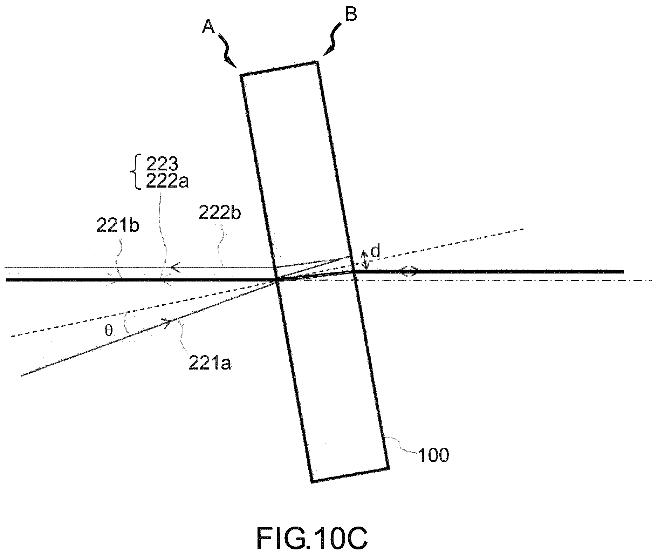

La source lumineuse 210 émet dans cet exemple un premier faisceau lumineux 221. Dans cet exemple, les moyens d'émission sont configurés pour qu'en opération, le faisceau lumineux 221 soit incident sur la lame de façon sensiblement perpendiculaire à la lame (incidence normale). Bien qu'une incidence normale soir privilégiée, il est possible d'adapter le système d'analyse pour que le premier faisceau lumineux soit incident avec un angle par rapport à la normale. Un tel exemple est illustré sur les Fig. 10A, Fig. 10B, Fig. 10C.

Dans l'exemple des Fig. 2A et Fig. 2B, on cherche à analyser une lame à face parallèles sensiblement plane et les moyens d'émission sont configurés pour qu'en opération, le faisceau lumineux soit incident sur la lame avec un front d'onde sensiblement plan. Par exemple, les moyens d'émission comprennent, outre la source 210, un ensemble de lentilles optiques 211, 212, 215 et d'éléments de déflexion 213, 214 permettant de sensiblement collimater le faisceau lumineux en sortie de l'élément optique 215 et d'adapter la taille dudit faisceau à la taille de la lame à analyser. Avantageusement, l'ensemble des lentilles optiques permettent en outre d'assurer sensiblement une conjugaison optique entre la lame à analyser et un plan d'analyse de l'analyseur de front d'onde, par exemple le plan de la matrice de microlentilles dans le cas d'un analyseur de type Shack-Hartmann.

Comme illustré sur la Fig. 2A, dans une première étape du procédé mis en œuvre dans cet exemple, le premier faisceau lumineux 221 est, d'une part, réfléchi par la première face A de la lame 100 pour former un premier faisceau de réflexion 222a et, d'autre part, transmis par la lame et réfléchi par la deuxième face B de la lame 100 puis transmis à nouveau par cette dernière pour former un deuxième faisceau de réflexion 222b.

Les moyens d'analyse de front d'onde sont configurés pour recevoir, sur la surface d'analyse de l'analyseur de front d'onde 240, le premier faisceau de réflexion 222a et le deuxième faisceau de réflexion 222b afin de générer un premier signal de mesure caractéristique d'une combinaison des fronts d'onde desdits premier et deuxième faisceaux de réflexion, comme cela sera détaillé par la suite.

Dans l'exemple des Fig 2A et Fig. 2B, les moyens d'analyse du front d'onde comprennent un ensemble de lentilles optiques 211, 212, 215 et d'éléments de déflexion 213, 214 communs avec ceux des moyens d'émission pour diriger les faisceaux de réflexion vers l'analyseur de front d'onde 240. Le système 200 comprend en outre un élément optique 230 de séparation de faisceaux configuré pour séparer les moyens d'émission et les moyens d'analyse. L'élément optique 230 comprend par exemple une lame séparatrice ou un cube séparateur de faisceau.

Dans cet exemple, l'ensemble de lentilles optiques 211, 212, 215 et d'éléments de déflexion 213, 214 permettent de sensiblement adapter la taille des faisceaux de réflexion 221a et 221b ainsi que celle du faisceau de transmission 223 à la taille de la surface d'analyse de l'analyseur de front d'onde 240.

Comme illustré sur la Fig. 2B, dans une deuxième étape du procédé mis en œuvre dans cet exemple, le miroir de référence 250 est mis en place.

Le miroir 250 est agencé de telle sorte qu'un deuxième faisceau lumineux incident sur la lame se trouve incident, après transmission de la lame, sur le miroir 250, de façon sensiblement perpendiculaire au miroir 250. Dans cet exemple, le deuxième faisceau lumineux est émis par la même source lumineuse 210 que le premier faisceau lumineux, et est référencé 221 également car ils ont les mêmes propriétés (cohérence et longueur d'onde) ; mais le premier faisceau et le deuxième faisceau ne sont pas émis simultanément. Le deuxième faisceau incident est alors transmis une première fois par la lame 100, réfléchi par le miroir de référence 250 et transmis à nouveau par la lame 100. Il en résulte un faisceau de transmission 223 envoyé sur l'analyseur de front d'onde 240 des moyens d'analyse de front d'onde, afin de générer un deuxième signal de mesure caractéristique du front d'onde dudit faisceau de transmission.

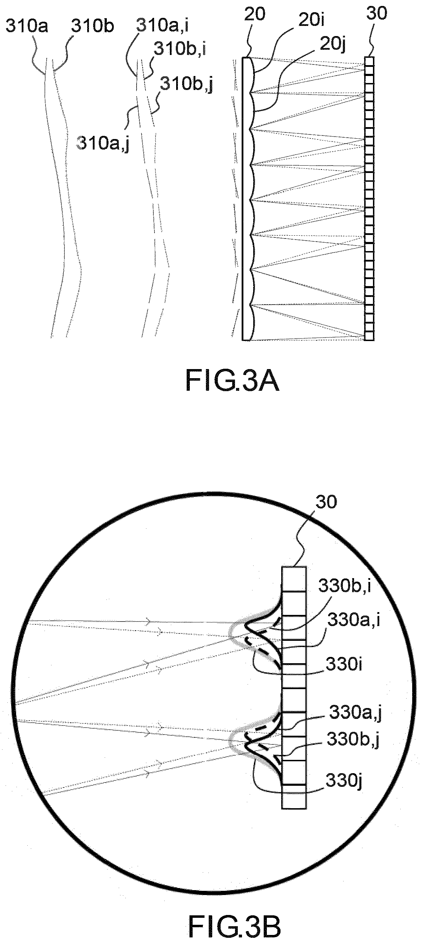

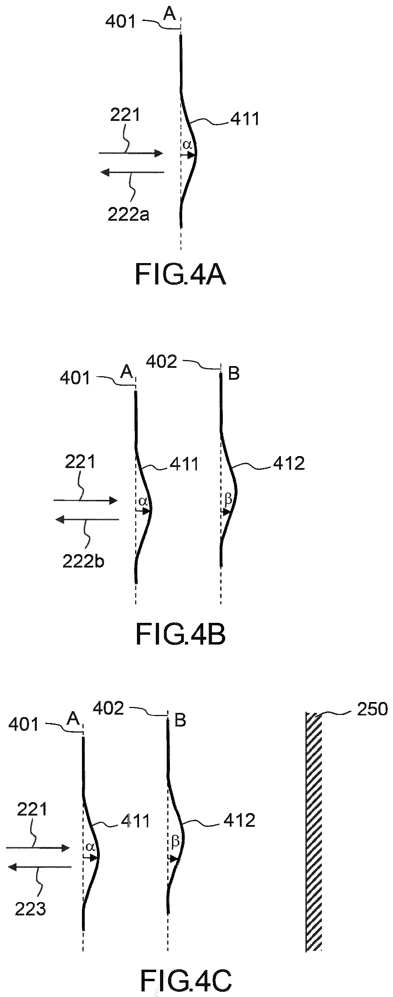

On peut alors calculer, au moyen de l'unité de traitement 260 et à partir dudit premier signal de mesure et dudit deuxième signal de mesure, au moins un premier signal représentatif d'une déformation de la première face A de la lame par rapport à une première surface de référence et au moins un deuxième signal représentatif d'une déformation de la deuxième face B de la lame par rapport à une deuxième surface de référence, comme cela est décrit ci-dessous au moyen des Fig. 3A, Fig. 3B , Fig. 4A, Fig. 4B, Fig. 4C.

Il est à noter que les éléments optiques du système 200 peuvent présenter des défauts de réalisation qui peuvent être pris en compte dans une étape de calibration pour ne pas perturber la qualité des mesures réalisées. Une façon pratique de procéder à la calibration est de mesurer ces défauts en réalisant une mesure de front d'onde dans la configuration de la figure 2B dans laquelle la lame à analyser 100 aurait été retirée. Ces défauts ainsi mesurés sont ensuite soustraits aux mesures réalisées (présentées en détail ci-après) en présence de la lame à analyser 100.

De façon pratique la qualité optique du miroir de référence 250 pourra être choisie en fonction de la précision souhaitée sur les mesures de déformations des faces A et B de la lame analyser 100. En effet, la précision de ces mesures ne pourra pas être meilleure que la qualité optique du miroir de référence 250.

Le principe du calcul est décrit ci-dessous et est illustré au moyen des Fig. 3A, Fig. 3B, Fig. 4A, Fig. 4B, Fig. 4C.

Le principe est décrit en prenant l'exemple d'un analyseur de front d'onde de type Shack-Hartmann mais s'applique à tout type d'analyseur de front d'onde, c'est-à-dire tout type de système de mesure capable de faire une mesure du front d'onde de façon directe sans avoir à faire interférer le faisceau de mesure avec un faisceau de référence. Ces analyseurs ont pour caractéristique commune notamment d'être sensibles à une dérivée du front d'onde. La Fig. 3A illustre ainsi un analyseur de type Shack-Hartmann identique à celui illustré sur la Fig. 1, avec notamment une matrice de microlentilles 20 et une matrice de détecteurs élémentaires 30.

Le principe est décrit en prenant l'exemple d'une lame à analyser à faces planes et sensiblement parallèles. On cherche ainsi les déformations des faces A et B de la lame par rapport à des surfaces de référence planes. Cependant, comme cela sera détaillé par la suite, le principe du calcul peut s'appliquer à d'autres formes de lames à faces parallèles. Dans la première étape de l'exemple du procédé décrit au moyen des Fig. 2A et Fig. 2B, on génère deux faisceaux de réflexion 222a et 222b issus respectivement de la réflexion par les faces A et B de la lame. Comme illustré sur la Fig. 3A, l'analyseur de front d'onde reçoit donc simultanément les fronts d'onde 310a et 310b des faisceaux de réflexion 222a, 222b respectivement. Chaque front d'onde 310a, 310b peut être déformé par rapport à un front d'onde de référence, par exemple un front d'onde plan.

Comme illustré sur la Fig. 3A, chaque microlentille (20i, 20j, ...) de la matrice de microlentilles intercepte et focalise une partie du front d'onde (310a,i, 310a,j, ...) du front d'onde 310a et intercepte et focalise une partie du front d'onde (310b,i, 310b,j, ...) du front d'onde 310b.

Comme illustré sur la Fig. 3B, il s'ensuit un déplacement du barycentre d'une part de la tache de focalisation (330a,i, 330a,j,...) résultant de la focalisation par la microlentille (20i, 20j, ...) de la partie du front d'onde (310a,i, 310a,j, ...) du front d'onde 310a et d'autre part un déplacement du barycentre de la tache de focalisation (330b,i, 330b,j,...) résultant de la focalisation par la microlentille (20i, 20j, ...) de la partie du front d'onde (310b,i, 310b,j, ...) du front d'onde 310b.

En pratique, la matrice de détecteurs élémentaires 30 détecte pour chaque microlentille une répartition d'énergie lumineuse (330i, 330j, ...) qui est une somme en énergie des taches de focalisation (330a,i, 330b,i,...) et (330a,j, 330b,j,...). Pour obtenir une somme en énergie de deux taches de focalisation 330a,i et 330b,i, on cherchera à ce que les taches de focalisation n'interfèrent pas et soient issues de deux faisceaux incohérents entre eux. Ceci est rendu possible, dans le cas de deux faisceaux issus des réflexions sur les deux faces d'une lame à faces sensiblement parallèles, par une source d'illumination dont la longueur de cohérence et inférieure à deux fois l'épaisseur optique de la lame.

D'une façon pratique les taches de focalisation (330a,i, 330b,i,...) et (330a,j, 330b,j,...) peuvent être superposées, partiellement superposées ou disjointes. Dans tous les cas, le déplacement de la répartition d'énergie lumineuse résultante (330i, 330j, ...) par rapport à une position théorique nominale (par exemple la position des taches de focalisation issues d'un front d'onde plan) est significative de la pente locale de la moyenne pondérée des fronts d'onde des faisceaux de réflexion 222a et 222b.

Dans un cas où l'on néglige les réflexions multiples sur la lame, on peut déterminer que les coefficients de pondération pour établir ladite moyenne pondérée sont le coefficient de réflexion $R_1$ de la face A pour le faisceau 222a et le coefficient de réflexion $R_2$ de la face B multiplié par le carré du coefficient de transmission T du matériau dont est formée la lame et multiplié par le carré de $(1-R_1)$ pour le faisceau 222b. $(1-R_1)$ est, d'une part, la fraction du faisceau d'illumination transmis dans le substrat de la lame au niveau d'interface air-face A et, d'autre part la fraction du faisceau réfléchi par la face B et transmis dans l'air au niveau d'interface face A-air.

A partir du signal de mesure ainsi déterminé et correspondant à la matrice bidimensionnelle des déplacements, on peut déterminer une matrice des pentes locales du front d'onde correspondant à la moyenne pondérée des fronts d'onde de réflexion 222a et 222b et en déduire une matrice des valeurs du front d'onde correspondant mesurées au niveau de chaque microlentille.

On décrit maintenant au moyen des Fig. 4A, Fig. 4B et Fig.4C plus en détails comment peuvent être déterminées les matrices de déformation $\alpha$ et $\beta$ des faces A et B par rapport à des surfaces de référence planes, dans un exemple donné à titre illustratif et non limitatif. Les Fig. 4A et Fig. 4B correspondent à la première étape du procédé tel que décrit en référence à la Fig. 2A.

La fig. 4A illustre une déformation locale $\alpha$ de la face A par rapport à une surface de référence 401, dans cet exemple une surface plane.

Le faisceau réfléchi 222a résultant de la réflexion du faisceau incident 221 par la face A subit une variation locale du chemin optique $\delta$.

[Math 1]

$$\delta = 2\alpha$$

Sur la Fig. 4B sont illustrées à la fois les faces A et B de la lame 100.

La figure 4B illustre en plus de la déformation locale de la face A, une déformation locale $\beta$ de la face B par rapport à une surface de référence 402, dans cet exemple une surface plane.

Le faisceau réfléchi 222b, résultant de la transmission de la lame par le premier faisceau lumineux 221 puis de la réflexion par la face B avant d'être transmis à nouveau par la lame, subit une variation locale du chemin optique $\delta$:

[Math 2]

$$\delta = 2[\alpha - n\alpha + n\beta]$$

où $n$ est l'indice de réfraction du matériau de la lame supposé sensiblement constant dans cet exemple.

Les faisceaux de réflexion 222a et 222b dont les fronts d'onde sont déformés localement comme expliqué ci-dessus du fait des déformations locales des faces A et B par rapport à leur surface de référence, sont reçus simultanément par l'analyseur de front d'onde comme illustré sur les Fig. 3A et Fig. 3B.

Il en résulte un premier signal de mesure matriciel $M_1$ caractéristique de la moyenne pondérée des fronts d'onde desdits premier 222a et deuxième faisceaux 222b de réflexion. Les coefficients de pondérations sont respectivement $R_1$ et $R_2*T^2*(1-R_1)^2$ :

[Math 3]

$$M_1 = \frac{[2\alpha(R_1 + R_2(1 - R_1)^2 T^2) - 2R_2(1 - R_1)^2 T^2 n(\alpha - \beta)]}{R_1 + R_2(1 - R_1)^2 T^2}$$

Où $R_1$ et $R_2$ sont les coefficients de réflexion de la face A et de la face B respectivement, supposés constants, T est le coefficient de transmission du matériau de la lame supposé constant, $\alpha$ et $\beta$ sont les matrices de déformations des faces A et B.

La Fig. 4C correspond à la deuxième étape du procédé tel que décrit en référence à la Fig. 2B.

Dans cet exemple, le faisceau transmis 223, résultant d'une première transmission de la lame par le deuxième faisceau lumineux, de la réflexion par le miroir 250 agencé de façon sensiblement perpendiculaire au faisceau lumineux, puis d'une deuxième transmission de la lame, subit une variation locale du chemin optique $\delta$:

[Math 4]

$$\delta = 2(n - 1)(\beta - \alpha)$$

Le faisceau de transmission 223 dont le front d'onde est déformé localement comme expliqué ci-dessus du fait des déformations locales des faces A et B, est reçu par l'analyseur de front d'onde 240.

Il en résulte un deuxième signal de mesure matriciel $M_2$ caractéristique du front d'onde du faisceau de transmission.

[Math 5]

$$M_2 = 2(n - 1)(\beta - \alpha)$$

A partir des mesures $M_1$ et $M_2$, il est possible de déduire les matrices de déformation $\alpha$ et $\beta$ par rapport à leur surface de référence:

[Math 6]

$$\alpha = \frac{M_1}{2} - \left( \frac{n(1 - R_1)^2 T^2 R_2 M_2}{2(n - 1)(R_1 + (1 - R_1)^2 T^2 R_2)} \right)$$

Et

[Math 7]

$$\beta = \alpha + \left( \frac{M_2}{2(n - 1)} \right)$$

A noter que $\alpha$ et $\beta$ étant les déformations des faces A et B par rapport à des surfaces de référence, il suffit pour obtenir les profils des faces A et B elles-mêmes d'additionner les déformations $\alpha$ et $\beta$ à leur surface de référence respectives.

Dans les calculs exposés ci-dessus, on a fait l'hypothèse, dans le calcul de $M_1$, que l'effet des réflexions multiples à l'intérieur de la lame est négligeable. Cela est légitime dans les cas où les coefficients de réflexions des faces de la lame sont inférieurs ou égales à environ 10% car, dans ce cas, la contribution des réflexions multiples à la mesure est inférieure à 1% du signal reçu par l'analyseur de front d'onde.

Pour les cas où les coefficients de réflexions seraient supérieurs à 10%, la prise en compte des réflexions multiples dans l'équation [Math 3] est possible sans difficulté particulière et aboutit à une expression numérique notablement plus complexe qui n'est pas reproduite ici.

Par ailleurs, la détermination de $M_2$ est réalisée en prenant comme hypothèse que cette mesure n'est pas perturbée par un éventuel signal venant des réflexions sur les faces de la lame. Cette hypothèse est en général acceptable dans la mesure où le signal de réflexion est beaucoup plus faible que le signal de transmission. Cependant, on peut s'affranchir du signal de réflexion dans la mesure de $M_2$ en appliquant à la lame un tilt de quelques degrés de façon à rejeter les réflexions en dehors de la zone de mesure. Alternativement, les signaux de réflexions peuvent être soustraits du signal de la mesure issu du faisceau de transmission. Il est également possible dans l'expression numérique de la mesure $M_2$ donnée par [Math 5], sans difficulté particulière, de prendre en compte la présence des réflexions ce qui amène là aussi à une expression numérique de $M_2$ plus complexe.

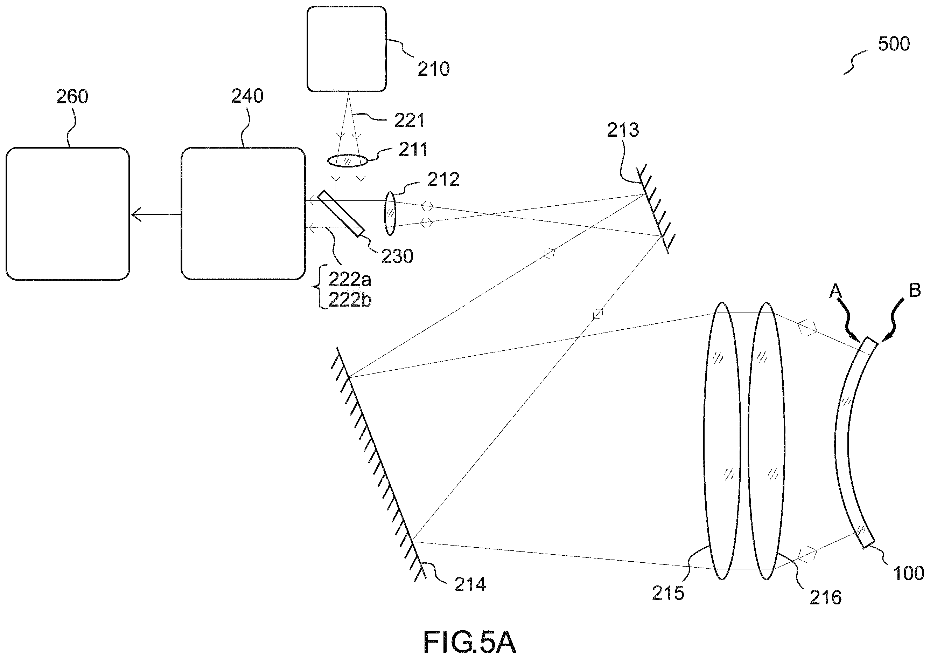

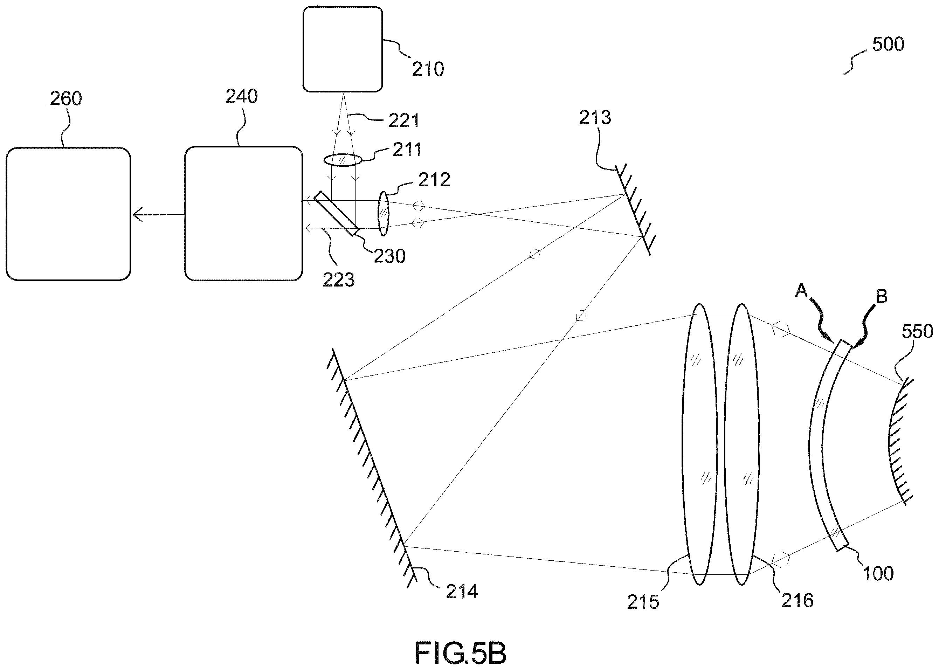

Les Fig. 5A et Fig. 5B illustrent deux étapes pour la mise en œuvre d'un exemple de procédé d'analyse de la qualité de surface d'une lame 100 à faces parallèles, au moyen d'un deuxième exemple d'un système d'analyse de la qualité de surface d'une lame. Dans cet exemple, on cherche à analyser la qualité d'une surface d'une lame non plane, c'est-à-dire qui présente au moins localement une courbure donnée non nulle.

Ainsi dans l'exemple illustré sur les Fig. 5A et Fig. 5B, on cherche à analyser la qualité de surface des faces A et B d'une lame 100 à faces parallèles, les faces de la lame présentant un rayon de courbure fini sensiblement constant. Une telle lame est par exemple un dôme de protection. Les rayons de courbure des faces de telles lames sont généralement compris entre quelques centimètres et quelques mètres.

Le système 500 d'analyse de la qualité de surface est sensiblement identique à celui illustré sur les Fig. 2A et Fig. 2B, seuls les éléments optiques communs aux moyens d'émission et d'analyse du front d'onde étant adaptés pour que le premier faisceau lumineux 221 émis par la source 210 soit incident sur la lame 100 de façon sensiblement perpendiculaire aux faces de la lame qui ne sont pas planes dans cet exemple. Le front d'onde de référence avec lequel les mesures de front d'onde sont comparées est dans cet exemple un front d'onde sphérique. De même, les surfaces de référence par rapport auxquelles les déformations des faces A et B de la lame sont analysées sont des surfaces de référence sphériques.

Ainsi, les moyens d'émission comprennent dans cet exemple une lentille optique 216 supplémentaire permettant de mettre en forme le faisceau lumineux 221 pour qu'il soit sensiblement perpendiculaire en tout point à la lame 100 à analyser et permettent de réaliser sensiblement la conjugaison optique entre la lame à analyser et la surface d'analyse de l'analyseur de front d'onde. Par ailleurs, le rayon de courbure et la position du miroir de référence 550 sont choisis de façon à ce que ce miroir soit sensiblement perpendiculaire en tout point au faisceau lumineux 221.

En pratique, grâce aux éléments optiques 216, 215, 230 et aux miroirs 213 et 214, les fronts d'onde des faisceaux réfléchis 222a et 222b reçus par l'analyseur de front d'onde 240 sont sensiblement plans, comme dans l'exemple décrit précédemment, aux déformations près résultant des déformations des faces A et B de la lame 100. En effet, les éléments optiques 216, 215, 230 et les miroirs 213 et 214 transforment le front d'onde de référence sphérique au niveau de la lame à analyser en front d'onde de référence plan au niveau de l'analyseur de front d'onde comme dans l'exemple décrit précédemment. Un traitement similaire peut donc être fait pour déterminer les matrices de déformation des faces A et B.

A noter qu'il serait envisageable aussi de recevoir directement les fronts d'onde sphérique au niveau de l'analyseur de front d'onde, auquel cal, le front d'onde de référence au niveau de l'analyseur de front d'onde serait sphérique.

Il est à noter que les éléments optiques du système 500 peuvent présenter des défauts de réalisation que l'on peut prendre en compte dans une étape de calibration pour ne pas perturber la qualité des mesures réalisées. Une façon pratique de le faire et de mesurer ces défauts en réalisant une mesure de front d'onde dans la configuration de la figure 5B dans laquelle la lame à analyser 100 aurait été retirée. Ces défauts ainsi mesurés sont ensuite soustraits aux mesures réalisées en présence de la lame à analyser 100.

De façon pratique, la qualité optique du miroir de référence 550 peut être choisie en fonction de la précision souhaitée sur les mesures de déformations des faces A et B de la lame analyser 100. En effet la précision de ces mesures ne pourra pas être meilleure que la qualité optique du miroir de référence 550.

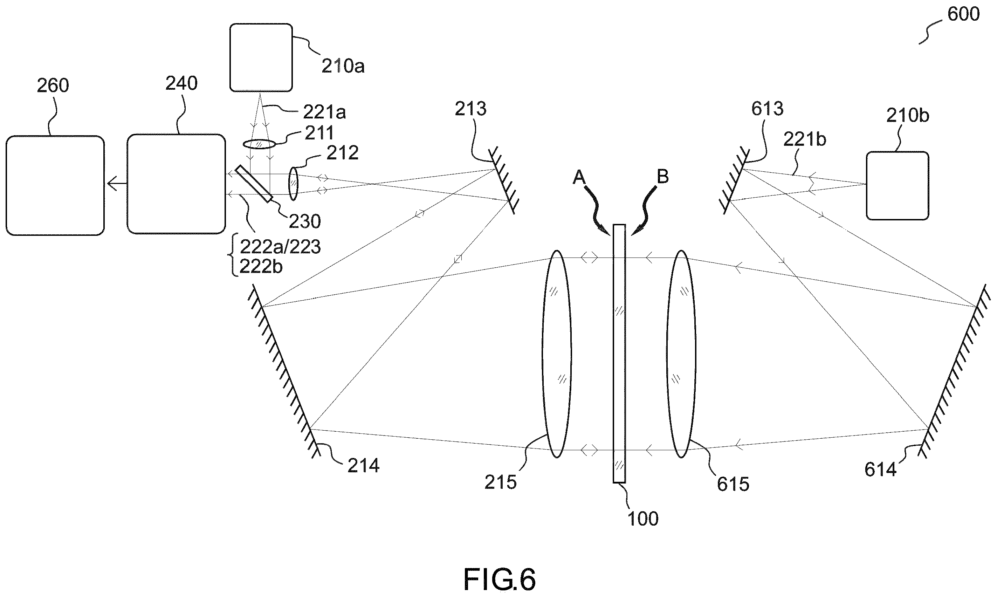

La Fig. 6 illustre la mise en œuvre d'un autre exemple d'un procédé d'analyse de la qualité de surface d'une lame 100 à faces parallèles selon la présente description, au moyen d'un deuxième exemple d'un système d'analyse de la qualité de surface d'une lame. Dans cet exemple, on cherche à analyser la qualité d'une surface d'une lame 100 plane à faces parallèles.

Le système d'analyse de la qualité de surface d'une lame, illustré sur la Fig. 6 et référencé 600, comprend un support (non représenté sur les figures), configuré pour recevoir la lame 100 à analyser mais ne nécessite pas de miroir de référence comme dans les exemples illustrés au moyen des Fig. 2A, Fig. 2B, Fig. 5A, Fig. 5B, sauf pour une éventuelle procédure de calibration, comme cela sera décrit par la suite.

Le système 600 comprend des moyens d'émission lumineuse comprenant dans cet exemple une première source d'émission lumineuse 210a à faible cohérence temporelle, et présentant au moins une longueur d'onde à laquelle la lame 100 est au moins partiellement transparente. Par exemple, la source d'émission lumineuse 210a peut comprendre, comme précédemment, une lampe à incandescence, LED, SLED ou une diode laser fonctionnant en dessous du seuil de génération de l'effet laser.

Les moyens d'émission comprennent par ailleurs une deuxième source d'émission lumineuse 210b présentant au moins une longueur d'onde à laquelle la lame 100 est au moins partiellement transparente. Contrairement à la source 210a, la source 210b n'a pas l'obligation de présenter une faible longueur de cohérence ce qui étend les possibilités. Ainsi cette source d'émission lumineuse 210b peut comprendre, comme précédemment, une lampe à incandescence, LED, SLED ou une diode laser fonctionnant en dessous du seuil de génération de l'effet laser mais aussi un laser ou une diode laser fonctionnant au-dessus de son seuil de génération de l'effet laser.

Les sources précitées ont l'avantage d'être cohérentes spatialement.

De manière générale, on pourra choisir des sources lumineuses spatialement cohérentes pour l'émission du premier et du deuxième faisceau lumineux. En effet, une meilleure précision de mesure de l'analyse de front d'onde est obtenue avec des faisceaux cohérents spatialement.

Dans le cas de l'utilisation d'un analyseur de front d'onde Shack-Hartmann par exemple, les premier et deuxième faisceaux lumineux pourront présenter une cohérence spatiale suffisante pour que les faisceaux de réflexion ou de transmission résultants, incidents sur la matrice de microlentilles, génèrent des taches de focalisation dont la taille est inférieure à la taille de la microlentille qui la génère.

Le système 600 comprend en outre des moyens d'analyse du front d'onde comprenant, dans l'exemple de la Fig. 6 un analyseur de front d'onde 240, par exemple, mais non limitativement, un analyseur de type Shack-Hartmann et une unité de traitement 260 configuré pour le traitement de signaux de mesure émis par l'analyseur de front d'onde 240.

La première source lumineuse 210a émet dans cet exemple un premier faisceau lumineux 221a. Les moyens d'émission sont configurés pour qu'en opération, le premier faisceau lumineux 221a soit incident sur une face de la lame, dans cet exemple la face A, avantageusement de façon sensiblement perpendiculaire à la lame. Dans l'exemple de la Fig. 6, on cherche à analyser une lame à face parallèles sensiblement plane et les moyens d'émission sont configurés pour qu'en opération, le faisceau lumineux soit incident sur la lame avec un front d'onde sensiblement plan. Par exemple, les moyens d'émission comprennent, comme dans les exemples précédents, outre la source 210a, un ensemble de lentilles optiques 211, 212, 215 et d'éléments de déflexion 213, 214.

La deuxième source lumineuse 210b émet dans cet exemple un deuxième faisceau lumineux 221b. Les moyens d'émission sont configurés pour qu'en opération, le deuxième faisceau lumineux 221b soit incident sur l'autre face de la lame, dans cet exemple la face B, par exemple, mais non nécessairement, de façon sensiblement perpendiculaire à la lame. Dans l'exemple de la Fig. 6, on cherche à analyser une lame à face parallèles sensiblement plane et les moyens d'émission sont configurés pour qu'en opération, le deuxième faisceau lumineux soit incident sur la lame avec un front d'onde sensiblement plan. Par exemple, les moyens d'émission comprennent, outre la source 210b, un ensemble de lentilles optiques 615 et d'éléments de déflexion 613, 614 permettant de sensiblement collimater le faisceau et d'adapter sa taille à celle de la lame à analyser.

Comme illustré sur la Fig. 6, dans une première étape du procédé mis en œuvre dans cet exemple, la source 210a est activée et le premier faisceau lumineux incident 221a est, d'une part, réfléchi par la première face A de la lame 100 pour former un premier faisceau de réflexion 222a et, d'autre part, transmis par la lame, réfléchi par la deuxième face B de la lame 100 et transmis de nouveau par la lame 100 pour former un deuxième faisceau de réflexion 222b.

Les moyens d'analyse de front d'onde sont configurés pour recevoir le premier faisceau de réflexion 222a et le deuxième faisceau de réflexion 222b afin de générer un premier signal de mesure caractéristique d'une combinaison des fronts d'onde desdits premier et deuxième faisceaux de réflexion, comme cela a été décrit précédemment.

Dans l'exemple de la Fig. 6, les moyens d'analyse du front d'onde comprennent, comme dans l'exemple précédent, un ensemble de lentilles optiques 211, 212, 215 et d'éléments de déflexion 213, 214 communs avec ceux des moyens d'émission pour diriger les faisceaux de réflexion vers l'analyseur de front d'onde 240. Le système 200 comprend en outre, comme précédemment, un élément optique 230 de séparation de faisceaux configuré pour séparer les moyens d'émission et les moyens d'analyse.

Dans une deuxième étape du procédé mis en œuvre dans cet exemple, la source 210b est activée tandis que la source 210a est éteinte et le deuxième faisceau lumineux 221b est transmis par la lame 100. Il en résulte un faisceau de transmission 223 envoyé sur l'analyseur de front d'onde 240 des moyens d'analyse de front d'onde, afin de générer un deuxième signal de mesure caractéristique du front d'onde dudit faisceau de transmission. On peut alors calculer, au moyen de l'unité de traitement 260 et à partir dudit premier signal de mesure et dudit deuxième signal de mesure, au moins un premier signal représentatif d'une déformation de la première face A de la lame par rapport à une première surface de référence et au moins un deuxième signal représentatif d'une déformation de la deuxième face B de la lame par rapport à une deuxième surface de référence, comme cela a été décrit ci-dessus au moyen des Fig. 3A, Fig. 3B , Fig. 4A, Fig. 4B, Fig. 4C.

A noter que du fait du simple passage dans la lame, l'équation [Math 5] devient :

[Math 8]

$$M_2 = (n-1)(\beta - \alpha)$$

Comme expliqué en référence aux exemples précédents, les éléments optiques du système 600 peuvent présenter des défauts de réalisation qui peuvent être pris en compte dans une étape de calibration pour ne pas perturber la qualité des mesures réalisées. Deux étapes de calibration peuvent être mises en œuvre. Une première étape de calibration pour le faisceau de transmission et une deuxième étape de calibration pour le faisceau de réflexion. Une façon pratique de faire l'étape de calibration du faisceau de transmission est de mesurer les défauts des optiques en réalisant une mesure de front d'onde dans la configuration de la FIG. 6 avec la source 210b allumée (source 210a est éteinte) dans laquelle la lame à analyser 100 aurait été retirée. Ces défauts ainsi mesurés sont ensuite soustraits aux mesures en transmission réalisées en présence de la lame à analyser 100. L'étape de la calibration du faisceau en réflexion est identique à la calibration décrite pour les figures 2A et 2B où la lame est remplacée par un miroir de référence (la source 210a est allumée et la source 210b est éteinte).

Bien qu'illustré dans le cas de l'analyse d'une lame plane, le procédé décrit au moyen de la Fig. 6 peut être adapté à l'analyse d'une lame courbe. Pour cela, les éléments optiques 615, 614, 613 notamment doivent être adaptés, par exemple pour que l'image de la source d'émission 210b par les éléments optiques se trouve sensiblement au centre de courbure de la lame à analyser.

Par rapports aux exemples de réalisation des Fig. 2A, Fig. 2B, Fig. 5A, Fig. 5B, les procédés d'analyse de la qualité de surface d'une lame mis en en œuvre avec un système tel que celui représenté sur la Fig. 6 peuvent être plus rapides puisqu'il n'est pas utile de prévoir l'implantation d'un miroir de référence pour la mesure elle-même, un miroir de référence pouvant être utile seulement pour des procédures de calibration.

Dans des exemples de réalisation (non représentés sur les figures), le système décrit sur la Fig 6 peut intégrer une source lumineuse supplémentaire en parallèle de la deuxième source 210b par exemple via une lame séparatrice, un cube séparateur ou une lame dichroïque. Cette source lumineuse supplémentaire peut émettre un troisième faisceau lumineux dont la longueur d'onde et/ou la polarisation est différente du deuxième faisceau lumineux émis pour la source 210b. Ce troisième faisceau lumineux génère un deuxième faisceau de transmission et suit un trajet optique identique au deuxième faisceau lumineux qui génère le premier faisceau de transmission. Le second faisceau de transmission est reçu par l'analyseur 240 pour générer un troisième signal de mesure caractéristique du front d'onde dudit deuxième faisceau de transmission. Une comparaison du deuxième signal de mesure caractéristique du front d'onde du premier faisceau de transmission et du troisième signal de mesure caractéristique du front d'onde du deuxième faisceau de transmission permet de générer un signal caractéristique des variations de l'indice de réfraction au sein de la lame.

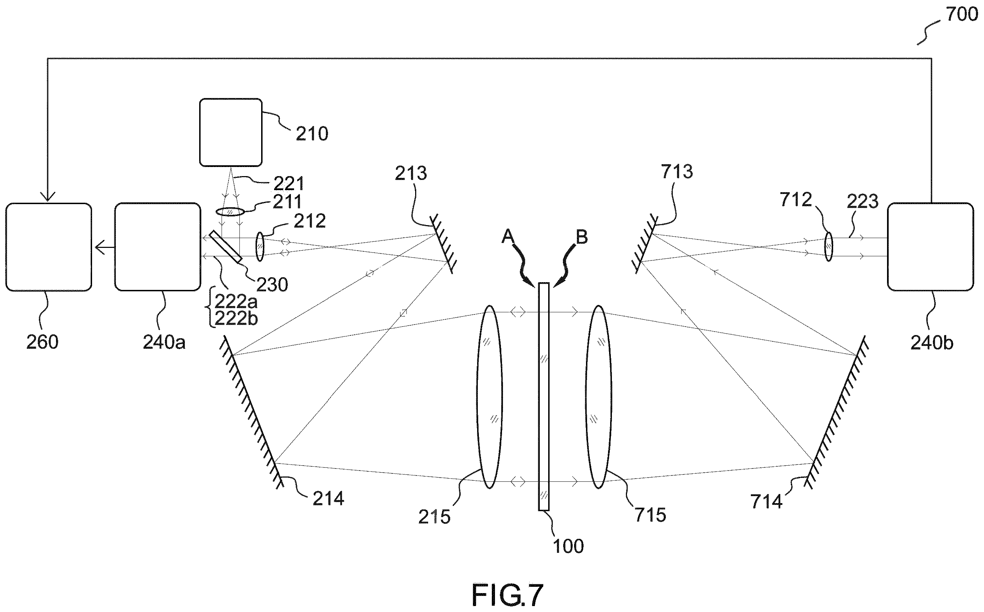

La Fig. 7 illustre la mise en œuvre d'un autre exemple d'un procédé d'analyse de la qualité de surface d'une lame 100 à faces parallèles selon la présente description, au moyen d'un troisième exemple d'un système d'analyse de la qualité de surface d'une lame. Dans cet exemple, les deux étapes du procédé visant à obtenir respectivement le premier et le deuxième signal de mesure, peuvent être réalisées simultanément. Dans cet exemple, on cherche à analyser la qualité d'une surface d'une lame 100 à faces sensiblement planes et parallèles.

Le système d'analyse de la qualité de surface d'une lame, illustré sur la Fig. 7 et référencé 700, comprend un support (non représenté sur les figures), configuré pour recevoir la lame 100 à analyser mais ne nécessite pas de miroir de référence comme dans les exemples illustrés au moyen des Fig. 2A, Fig. 2B, Fig. 5A, Fig. 5B, sauf pour une éventuelle calibration, comme cela sera décrit par la suite.

Le système 700 comprend des moyens d'émission lumineuse comprenant, dans cet exemple, et comme dans les exemples des Fig. 2A, Fig. 2B, Fig. 5A, Fig. 5B, une seule source d'émission lumineuse 210, à faible cohérence temporelle, et présentant au moins une longueur d'onde à laquelle la lame 100 est au moins partiellement transparente. Par exemple, la source d'émission lumineuse 210 peut comprendre, comme précédemment, une lampe à incandescence, LED, SLED ou une diode laser fonctionnant en dessous du seuil de génération de l'effet laser.

Le système 700 comprend en outre des moyens d'analyse du front d'onde comprenant, dans l'exemple de la Fig. 7 un premier analyseur de front d'onde 240a et un deuxième analyseur de front d'onde 240b distinct du premier analyseur de front d'onde 240a, par exemple, mais non limitativement, des analyseurs de type Shack-Hartmann, et une unité de traitement 260 configuré pour le traitement de signaux de mesure émis par les analyseurs de front d'onde 240a et 240b. Avantageusement, les analyseurs de front d'onde sont de nature identique, mais il est possible d'utiliser des analyseurs de front d'onde de nature différente.

La source lumineuse 210 émet dans cet exemple un premier faisceau lumineux 221. Les moyens d'émission sont configurés pour qu'en opération, le premier faisceau lumineux 221 soit incident sur une face de la lame, dans cet exemple la face A, de façon sensiblement perpendiculaire à la lame. Dans l'exemple de la Fig. 7, on cherche à analyser une lame à faces parallèles sensiblement planes et les moyens d'émission sont configurés pour qu'en opération, le faisceau lumineux soit incident sur la lame avec un front d'onde sensiblement plan. Par exemple, les moyens d'émission comprennent, comme dans les exemples précédents, outre la source 210, un ensemble de lentilles optiques 211, 212, 215 et d'éléments de déflexion 213, 214.

Comme illustré sur la Fig. 7, dans une première étape du procédé mis en œuvre dans cet exemple, la source 210 est activée et le premier faisceau lumineux 221 est, d'une part, réfléchi par la première face A de la lame 100 pour former un premier faisceau de réflexion 222a et, d'autre part, transmis par la lame puis réfléchi par la deuxième face B de la lame 100 et transmis de nouveau par la lame 100 pour former un deuxième faisceau de réflexion 222b.

Les moyens d'analyse de front d'onde sont configurés pour recevoir le premier faisceau de réflexion 222a et le deuxième faisceau de réflexion 222b afin de générer un premier signal de mesure caractéristique d'une combinaison des fronts d'onde desdits premier et deuxième faisceaux de réflexion, comme cela a été décrit précédemment.

Dans l'exemple de la Fig. 7, les moyens d'analyse du front d'onde comprennent, comme dans l'exemple précédent, un ensemble de lentilles optiques 211, 212, 215 et d'éléments de déflexion 213, 214 communs avec ceux des moyens d'émission pour diriger les faisceaux de réflexion vers le premier analyseur de front d'onde 240a et pour réaliser sensiblement la conjugaison optique entre la lame 100 à analyser et la surface de mesure de l'analyseur de front d'onde 240a. Le système 700 comprend en outre, comme précédemment, un élément optique 230 de séparation de faisceaux configuré pour séparer les moyens d'émission et l'analyseur de front d'onde 240a.

Dans une deuxième étape du procédé mis en œuvre dans cet exemple, qui peut être simultanée à la première étape, un faisceau de transmission 223 qui résulte de la transmission par la lame d'un deuxième faisceau lumineux qui peut être confondu avec le premier faisceau lumineux 221, est envoyé sur le deuxième analyseur de front d'onde 240b des moyens d'analyse de front d'onde, afin de générer un deuxième signal de mesure caractéristique du front d'onde dudit faisceau de transmission.

Dans l'exemple de la Fig. 7, les moyens d'analyse du front d'onde comprennent un ensemble de lentilles optiques 715, 712 et d'éléments de déflexion 714, 713 pour diriger le faisceau de transmission 223 vers le deuxième analyseur de front d'onde 240b et réaliser sensiblement la conjugaison optique entre la lame 100 à analyser et la surface de mesure de l'analyseur de front d'onde 240b.

On peut alors calculer, au moyen de l'unité de traitement 260 et à partir dudit premier signal de mesure et dudit deuxième signal de mesure, au moins un premier signal représentatif d'une déformation de la première face A de la lame par rapport à une première surface de référence et au moins un deuxième signal représentatif d'une déformation de la deuxième face B de la lame par rapport à une deuxième surface de référence, comme cela a été décrit ci-dessus au moyen des Fig. 3A, Fig. 3B , Fig. 4A, Fig. 4B, Fig. 4C.

Comme dans l'exemple de la Fig. 6, du fait de la transmission simple de la lame par le deuxième faisceau lumineux, l'équation [math 8] s'applique.

Comme précédemment, les éléments optiques du système 700 peuvent présenter des défauts de réalisation qui peuvent être pris en compte dans une étape de calibration pour ne pas perturber la qualité des mesures réalisées. On pourra prévoir deux étapes de calibration. Une étape de calibration pour le faisceau de transmission et une étape de calibration pour le faisceau de réflexion. Une façon pratique de faire l'étape de calibration du faisceau de transmission est de mesurer les défauts des optiques avec l'analyseur 240b en réalisant une mesure de front d'onde dans la configuration de la FIG. 7 avec la source 210 allumée dans laquelle la lame à analyser 100 aurait été retirée. Ces défauts ainsi mesurés sont ensuite soustraits aux mesures en transmission réalisées en présence de la lame à analyser 100. L'étape de la calibration du faisceau en réflexion est identique à la calibration décrite pour les figures 2A et 2B où la lame est remplacée par un miroir de référence.

Bien qu'illustré dans le cas de l'analyse d'une lame plane, le procédé décrit au moyen de la FIG. 7 peut être adapté à l'analyse d'une lame courbe. Pour cela, les éléments optiques 211 à 215 doivent être adaptés, par exemple pour adapter la taille du faisceau 221 à la taille de la lame à analyser, pour assurer que le faisceau 221 arrive sensiblement perpendiculaire sur la surface de la lame à analyser et pour réaliser sensiblement la conjugaison optique entre la lame 100 à analyser et la surface de mesure de l'analyseur de front d'onde 240a. Les éléments optiques 715, 714, 713 doivent être aussi adaptés, par exemple, pour adapter la taille du faisceau de transmission au niveau de la lame à analyser 100 à la taille de la surface de mesure de l'analyseur 240b et réaliser sensiblement la conjugaison optique entre la lame 100 à analyser et la surface de mesure de l'analyseur de front d'onde 240b.

Par rapports aux exemples de réalisation des Fig. 2A, Fig. 2B, Fig. 5A, Fig. 5B, les procédés d'analyse de la qualité de surface d'une lame mis en en œuvre avec un système tel que celui représenté sur la Fig. 7 peuvent être plus rapides puisqu'il n'est pas utile de prévoir l'implantation d'un miroir de référence pour la mesure elle-même, un miroir de référence pouvant être utile seulement pour des procédures de calibration. Par ailleurs, les mesures de M1 et M2 peuvent se faire simultanément grâce à la présence des deux analyseurs de front d'onde car les premier et deuxième faisceaux de réflexion 221a, 221b ainsi que le faisceau de transmission 223 peuvent être générés simultanément à partir du faisceau lumineux 221.

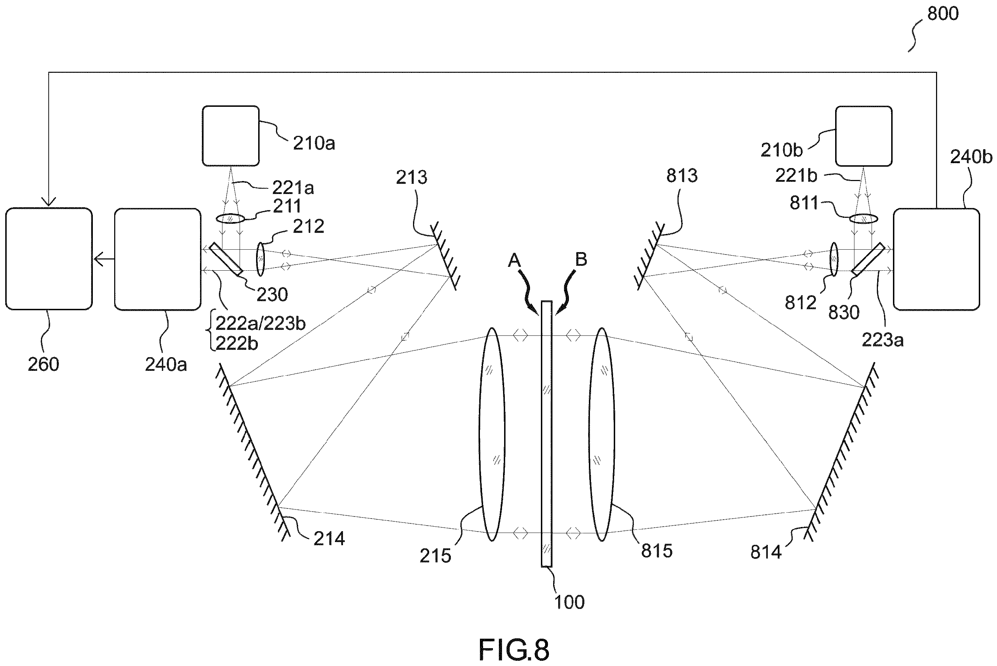

La Fig. 8 illustre un système 800 comprenant, comme dans l'exemple de la FIG. 6, des moyens d'émission avec une première source d'émission 210a et une deuxième source d'émission 210b distincte de la première source. Le système 800 comprend également, comme dans l'exemple de la Fig. 7, des moyens d'analyse de front d'onde comprenant un premier analyseur de front d'onde 240a et un deuxième analyseur de front d'onde 240b distinct premier analyseur de front d'onde 240a. Le système 800 comprend également une unité de traitement 260 configuré pour traiter les signaux de mesure produits par les analyseurs de front d'onde 240a et 240b.

Un tel système présente des avantages similaires à ceux du système de la Fig. 7, à savoir qu'un même premier faisceau lumineux 221a émis par la première source 210a peut simultanément produire les faisceaux de réflexion 222a et 222b détectés par le premier analyseur de front d'onde 240a pour générer le premier signal de mesure caractéristique d'une combinaison des fronts d'onde desdits premier et deuxième faisceaux de réflexion, et produire le premier faisceau de transmission 223a détecté par le deuxième analyseur de front d'onde 240b pour produire le deuxième signal de mesure caractéristique du front d'onde dudit faisceau de transmission.

Pour cela, les moyens d'analyse du front d'onde peuvent comprendre, comme dans l'exemple précédent, un ensemble de lentilles optiques 211, 212, 215 et d'éléments de déflexion 213, 214 communs avec ceux des moyens d'émission pour diriger les faisceaux de réflexion vers le premier analyseur de front d'onde 240a et pour réaliser sensiblement la conjugaison optique entre la lame 100 à analyser et la surface de mesure de l'analyseur de front d'onde 240a. Le système 800 peut comprendre en outre, comme précédemment, un élément optique 230 de séparation de faisceaux configuré pour séparer les moyens d'émission et l'analyseur de front d'onde 240a. Par ailleurs, dans l'exemple de la Fig. 8, les moyens d'analyse du front d'onde comprennent un ensemble de lentilles optiques 815, 812 et d'éléments de déflexion 814, 813 pour diriger le faisceau de transmission 223a vers le deuxième analyseur de front d'onde 240b et réaliser sensiblement la conjugaison optique entre la lame 100 à analyser et la surface de mesure de l'analyseur de front d'onde 240b. En outre, dans cet exemple, la deuxième source lumineuse 210b est configurée pour émettre un deuxième faisceau lumineux 221b qui comprend une longueur d'onde et/ou une polarisation différente(s) de celui du premier faisceau lumineux 221a.

Le procédé peut alors comprendre, dans un exemple de réalisation, la réception par le premier analyseur de front d'onde 240a d'un deuxième faisceau de transmission 223b résultant d'une première transmission de la lame par ledit deuxième faisceau lumineux 221b afin de générer un troisième signal de mesure caractéristique du front d'onde dudit deuxième faisceau de transmission. Une comparaison du deuxième signal de mesure caractéristique du front d'onde du premier faisceau de transmission et du troisième signal de mesure caractéristique du front d'onde dudit deuxième faisceau de transmission permet de générer un signal caractéristique des variations de l'indice de réfraction au sein de la lame.

Comme illustré sur la Fig. 8, les moyens d'émission peuvent comprendre des éléments optiques 811 et 812 - 815 communs aux moyens d'analyse, ainsi qu'un élément séparateur 830, pour envoyer le deuxième faisceau lumineux 221b vers la lame 100, par exemple, mais non nécessairement, avec une incidence normale.

Des procédures de calibration sont possibles, comme celles décrites en relation avec les figures précédentes.

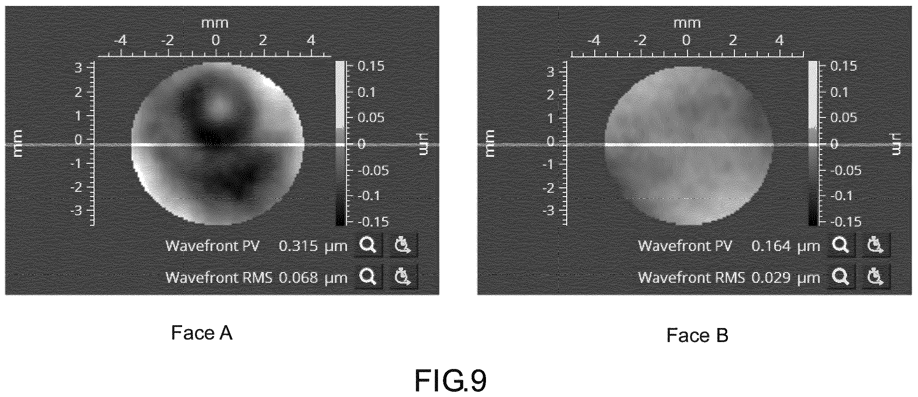

La Fig. 9 illustre des images expérimentales représentant les déformations de faces d'une lame plane à faces parallèles, les images étant obtenues au moyen d'un procédé selon la présente description.

Plus précisément dans cet exemple, la lame est une lame à faces planes et parallèles de 3 mm d'épaisseur résultant d'un polissage double face et une des 2 faces (la face A) présente des erreurs de polissage.

Le système utilisé pour l'analyse est un système du type de celui illustré sur les Fig. 2A et Fig. 2B. La source d'émission est une diode laser injectée dans une fibre monomode utilisée sous le seuil de génération de l'effet laser et l'analyseur de front d'onde est un analyseur de type Shack-Hartmann.

Les matrices de déformation sont obtenues au moyen des formules [Math 6] et [Math 7] à partir d'un premier signal de mesure $M_1$ caractéristique d'une combinaison des fronts d'onde des premier et deuxième faisceaux de réflexion et d'un deuxième signal de mesure $M_2$ caractéristique du front d'onde du faisceau de transmission, comme expliqué en référence aux Fig. 2A et Fig. 2B.

La lame est analysée et les matrices de déformations $\alpha$ et $\beta$ des faces A et B par rapport à des surfaces de référence planes sont déterminées et illustrées respectivement sur les images gauche et droite de la Fig. 9.

On observe notamment les erreurs de polissage sur la face A d'une amplitude P-V (peak to valley) de 0,315 $\mu$m. Cette expérience démontre que la méthode permet clairement de mesurer distinctement les 2 faces car la mesure de la face B ne présente pas de défaut de polissage comme attendu sur cette lame qui ne présente des erreurs de polissage que sur une seule de ses faces.

Dans les exemples de réalisation décrits au moyen des Fig. 2A, Fig. 2B, Fig. 6, Fig. 7, Fig. 8, on a considéré un premier faisceau lumineux incident de façon sensiblement perpendiculaire à la lame à analyser.

Bien que ce soit une configuration avantageuse, l'homme du métier pourra concevoir d'autres modes de réalisation, notamment adaptés pour l'utilisation d'une lame inclinée. La Fig. 10A représente ainsi un schéma illustrant une première étape d'un exemple de procédé d'analyse de la qualité de surface d'une lame selon la présente description, au moyen d'un exemple d'un système d'analyse de la qualité de surface d'une lame selon la présente description, adapté pour une incidence du premier faisceau lumineux sur la lame avec un angle d'inclinaison non nul par rapport à la normale et la Fig. 10B représente un schéma illustrant une deuxième étape de l'exemple du procédé d'analyse de la qualité de surface de la lame. Dans cet exemple, un miroir de référence 250 est utilisé, comme dans l'exemple des Fig. 2A et Fig. 2B.

Les moyens d'émission comprennent dans cet exemple deux sources d'émission lumineuse, respectivement 210a pour l'émission du premier faisceau lumineux 221a à faible cohérence temporelle (Fig. 10A) et 210b pour l'émission du deuxième faisceau lumineux 221b (Fig. 10B).

Les moyens d'émission comprennent également, comme illustré sur les Fig. 10A et Fig. 10B, un ensemble de lentilles optiques 1013, 1018, 1017, 1014 et d'éléments de déflexion 1011, 1012, 1016, 1015 pour diriger le premier faisceau lumineux émis par la première source 210a et le deuxième faisceau lumineux émis par la deuxième source 210b vers la lame 100.

Les moyens d'analyse comprennent dans cet exemple un ensemble de lentilles optiques 1014, 1017, 1018 et d'éléments de déflexion 1015, 1016 communs avec ceux des moyens d'émission pour diriger les faisceaux de réflexion 222a, 222b vers le premier analyseur de front d'onde 240a et pour réaliser sensiblement la conjugaison optique entre la lame 100 à analyser et la surface de mesure de l'analyseur de front d'onde 240a. Un élément séparateur 230 permet de séparer la voie d'analyse et la voie d'émission.

Comme illustré sur la Fig. 10C, le système décrit en référence aux Fig. 10A et Fig. 10B permet d'analyser une lame inclinée, avec certaines limites. Notamment, si l'angle θ d'inclinaison du premier faisceau lumineux 221a par rapport à la normale à la lame est trop important, il pourra en résulter, notamment dans le cas d'une lame épaisse, un décalage spatial noté *d* entre l'empreinte des défauts la face B sur le faisceau de réflexion 222b et leurs empreintes sur le faisceau en transmission de nature à biaiser le calcul des déformations des faces A et B à partir des mesures en réflexion et transmission. L'homme du métier saura, avec ses connaissances dans le domaine, adapter le montage optique pour limiter l'inclinaison du premier faisceau lumineux en fonction de l'épaisseur de la lame de façon à ce que le décalage *d* soit petit vis-à-vis de la période spatiale des défauts attendus sur la face B et de la résolution spatiale de l'analyseur de front d'onde.

Bien que décrite à travers un certain nombre d'exemples de réalisation, les systèmes et procédés selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## REFERENCES

Réf. 1: Craig R. Forest et al., « Metrology of thin transparent optics Shack-Hartmann wavefront sensing », Optical Engineering, 43(3), 2004, https://doi.org/10.1117/1.1645256.
Réf. 2: WO 2004/068088
Réf. 3: "Principles and History of Shack-Hartmann », Journal of Refractive Surgery Volume 17, September/October 2001.
Réf. 4: US6577403
Réf. 5: US20100310130
Réf. 6: US 20050036153

## Revendications

**1.** Procédé d'analyse de la qualité de surface d'une lame à faces parallèles (100), comprenant :

- l'émission par au moins une première source lumineuse (210, 210a) de moyens d'émission, d'au moins un premier faisceau lumineux (221) à faible cohérence temporelle, ledit au moins un premier faisceau lumineux étant incident sur une première face (A) de ladite lame, ladite lame étant au moins partiellement transparente à au moins une longueur d'onde dudit premier faisceau lumineux;
- la réception par au moins un premier analyseur de front d'onde (240, 240a) de moyens d'analyse de front d'onde, d'au moins un premier faisceau de réflexion (222a) et un deuxième faisceau de réflexion (222b), ledit premier faisceau de réflexion résultant de la réflexion dudit au moins un premier faisceau lumineux par ladite première face (A) de la lame et ledit deuxième faisceau de réflexion résultant d'une première transmission de la lame par ledit premier faisceau lumineux, puis d'une réflexion par une deuxième face (B) de la lame suivi d'une deuxième transmission de la lame, afin de générer au moins un premier signal de mesure caractéristique d'une combinaison des fronts d'onde desdits premier et deuxième faisceaux de réflexion ;

**caractérisé en ce qu'**il comprend

- la réception par lesdits moyens d'analyse de front d'onde, d'au moins un premier faisceau de transmission (223, 223a) résultant d'au moins une première transmission de la lame par un deuxième faisceau lumineux émis par lesdits moyens d'émission, afin de générer un deuxième signal de mesure caractéristique du front d'onde dudit faisceau de transmission ;
- le calcul, à partir dudit au moins un premier signal de mesure et dudit deuxième signal de mesure, d'au moins un premier signal représentatif d'une déformation de ladite première face de la lame par rapport à une première surface de référence et d'au moins un deuxième signal représentatif d'une déformation de la deuxième face de la lame par rapport à une deuxième surface de référence.

**2.** Procédé selon la revendication 1, dans lequel ledit au moins un premier faisceau lumineux est incident sur ladite lame de façon sensiblement perpendiculaire à ladite lame.

**3.** Procédé selon l'une quelconque des revendications 1 ou 2, dans lequel :

- ledit deuxième faisceau lumineux est incident sur ladite première face (A) de la lame et le procédé comprend en outre, pour la génération du deuxième signal de mesure :
- le positionnement d'un miroir de référence, agencé de façon sensiblement perpendiculaire audit deuxième faisceau lumineux; et dans lequel
- ledit premier faisceau de transmission (223) résulte d'une première transmission de lame par ledit deuxième faisceau lumineux , d'une réflexion par le miroir de référence et d'une deuxième transmission de la lame par le faisceau réfléchi par le miroir de référence ; et
- lesdits premier et deuxième faisceaux de réflexion et ledit premier faisceau de transmission sont reçus par ledit premier analyseur de front d'onde (240) des moyens d'analyse de front d'onde.

**4.** Procédé selon la revendication 3, dans lequel le premier faisceau lumineux et le deuxième faisceau lumineux sont émis par ladite première source lumineuse.

**5.** Procédé selon l'une quelconque des revendications 1 ou 2, dans lequel :

- ledit deuxième faisceau lumineux est incident sur ladite première face (A) de la lame ;
- ledit premier faisceau de transmission (223, 223a) résulte d'une première transmission de la lame par ledit deuxième faisceau lumineux ; et
- ledit premier faisceau de transmission est reçu par un deuxième analyseur de front d'onde (240b) des moyens d'analyse de front d'onde, distinct dudit premier analyseur de front d'onde.

**6.** Procédé selon l'une quelconque des revendications 1 ou 2, dans lequel :

- ledit deuxième faisceau lumineux (221b) est émis par une deuxième source lumineuse des moyens d'émission, distincte de la première source lumineuse, et est incident sur ladite deuxième face (B) de la lame ;
- ledit premier faisceau de transmission (223b) résulte d'une première transmission de la lame par ledit deuxième faisceau lumineux; et
- ledit premier faisceau de transmission est reçu par ledit premier analyseur de front d'onde (240) des moyens d'analyse de mesure.

**7.** Procédé selon la revendication 6, dans lequel :

- ledit premier faisceau lumineux émis par ladite première source lumineuse et ledit deuxième faisceau lumineux émis par ladite deuxième source lumineuse comprennent une longueur d'onde et/ou une polarisation différente ; le procédé comprenant en outre :

  - la réception par un deuxième analyseur de front d'onde (240b) des moyens d'analyse de front d'onde, distinct dudit premier analyseur de front d'onde, d'un deuxième faisceau de transmission (223a) résultant d'une première transmission de la lame par ledit premier faisceau incident; afin de générer un troisième signal de mesure caractéristique du front d'onde dudit deuxième faisceau de transmission ; et
  - une comparaison dudit deuxième signal de mesure caractéristique du front d'onde dudit premier faisceau de transmission et dudit troisième signal de mesure caractéristique du front d'onde dudit deuxième faisceau de transmission afin de générer un signal caractéristique des variations de l'indice de réfraction au sein de la lame.

**8.** Système d'analyse de la qualité de surface d'une lame à faces parallèles, le système comprenant :

- au moins un premier support configuré pour recevoir la lame à analyser;
- des moyens d'émission comprenant au moins une première source lumineuse pour l'émission d'au moins un premier faisceau lumineux à faible cohérence temporelle, et présentant au moins une longueur d'onde à laquelle ladite lame est au moins partiellement transparente, lesdits moyens d'émission étant configurés pour qu'en opération, ledit au moins un premier faisceau lumineux soit incident sur ladite lame;
- des moyens d'analyse de front d'onde comprenant au moins un premier analyseur de front d'onde (240, 240a) et configurés, en opération, pour :

- recevoir, sur une surface d'analyse dudit premier analyseur de front d'onde, au moins un premier faisceau de réflexion (222a) et un deuxième faisceau de réflexion (222b), ledit premier faisceau de réflexion résultant de la réflexion dudit au moins un premier faisceau lumineux par une première face (A) de la lame et ledit deuxième faisceau de réflexion résultant d'une première transmission de la lame par ledit premier faisceau lumineux puis d'une réflexion par une deuxième face (B) de la lame suivi d'une seconde transmission de la lame , afin de générer un premier signal de mesure caractéristique d'une combinaison des fronts d'onde desdits premier et deuxième faisceaux de réflexion ;

- recevoir, par lesdits moyens d'analyse de front d'onde, au moins un premier faisceau de transmission (223, 223a) résultant d'au moins une première transmission par la lame d'un deuxième faisceau lumineux émis par lesdits moyens d'émission, afin de générer un deuxième signal de mesure caractéristique du front d'onde dudit faisceau de transmission ;

- une unité de traitement (260) configurée pour calculer, à partir dudit premier signal de mesure et dudit deuxième signal de mesure, au moins un premier signal représentatif d'une déformation de ladite première face de la lame par rapport à une première surface de référence et au moins un deuxième signal représentatif d'une déformation de la deuxième face de la lame par rapport à une deuxième surface de référence.

9. Système d'analyse selon la revendication 8, dans lequel lesdits moyens d'émission sont configurés pour qu'en opération, ledit au moins un premier faisceau lumineux soit incident sur ladite lame de façon sensiblement perpendiculaire à ladite lame.

10. Système selon l'une quelconque des revendications 8 ou 9, dans lequel ladite surface d'analyse dudit premier analyseur de front d'onde est sensiblement conjugué optiquement avec la lame à analyser.

11. Système d'analyse selon l'une quelconque des revendications 8 à 10, comprenant en outre:

- un deuxième support configuré pour recevoir un miroir de référence, le miroir de référence en opération étant agencé de façon sensiblement perpendiculaire audit deuxième faisceau lumineux; et dans lequel, en opération:

- ledit premier faisceau de transmission (223) résulte d'une première transmission dudit au moins un premier faisceau incident par la lame, d'une réflexion par le miroir de référence et d'une deuxième transmission par la lame du faisceau réfléchi par le miroir de référence ; et

- lesdits premier et deuxième faisceaux de réflexion et ledit premier faisceau de transmission sont reçus par ledit premier analyseur de front d'onde (240) des moyens d'analyse de front d'onde.

12. Système d'analyse selon l'une quelconque des revendications 8 à 10, dans lequel les moyens d'analyse de front d'onde comprennent un deuxième analyseur de front d'onde, distinct du premier analyseur de front d'onde, et :

- lesdits moyens d'émission sont configurés pour qu'en opération, ledit deuxième faisceau lumineux soit incident sur ladite première face de la lame, ledit premier faisceau de transmission résultant d'une première transmission de la lame par ledit deuxième faisceau lumineux;

- lesdits moyens d'analyse de front d'onde sont configurés pour qu'en opération, ledit premier faisceau de transmission est reçu par ledit deuxième analyseur de front d'onde des moyens d'analyse de front d'onde.

13. Système selon l'une quelconque des revendications 8 à 12, dans lequel ledit au moins un premier analyseur de front d'onde est choisi parmi : un analyseur de front d'onde Hartmann et Shack Hartmann, un interféromètre par décalage latéral, un déflectomètre par image de moiré, un dispositif basé sur la méthode de Schlieren.

**Patentansprüche**

1. Verfahren zum Analysieren der Oberflächenqualität einer Scheibe mit parallelen Seiten (100), umfassend:

- das Emittieren, durch mindestens eine erste Lichtquelle (210, 210a) von Emissionsmitteln, mindestens eines ersten Lichtstrahls (221) mit geringer zeitlicher Kohärenz, wobei der mindestens eine Lichtstrahl auf eine erste Seite (A) der Scheibe einfällt, wobei die Scheibe mindestens teilweise für mindestens eine Wellenlänge des ersten Lichtstrahls durchlässig ist;

- das Empfangen, durch mindestens einen ersten Wellenfrontanalysator (240, 240a) von Wellenfrontanalysemitteln, mindestens eines ersten Reflexionsstrahls (222a) und eines zweiten Reflexionsstrahls (222b), wobei der erste Reflexionsstrahl aus der Reflexion des mindestens einen ersten Lichtstrahls durch die erste Seite (A) der Scheibe resultiert und wobei der zweite Reflexionsstrahl aus einer ersten Transmission der Scheibe durch den ersten Lichtstrahl, dann einer Reflexion durch eine zweite Seite (B) der Scheibe gefolgt von einer zweiten Transmission der Scheibe resultiert, um mindestens ein erstes Messsignal zu erzeugen, das für eine Kombination der Wellenfronten des ersten und des zweiten Reflexionsstrahls charakteristisch ist;

**dadurch gekennzeichnet, dass** es umfasst

- das Empfangen, durch die Wellenfrontanalysemittel, mindestens eines ersten Transmissionsstrahls (223, 223a), der aus mindestens einer ersten Transmission der Scheibe durch einen zweiten von den Emissionsmitteln emittierten Lichtstrahl resultiert, um ein zweites Messsignal zu erzeugen, das für die Wellenfront des Transmissionsstrahls charakteristisch ist;
- das Berechnen, ausgehend von dem mindestens einen ersten Messsignal und von dem zweiten Messsignal, mindestens eines ersten Signals, das für eine Verformung der ersten Seite der Scheibe in Bezug auf eine erste Referenzoberfläche repräsentativ ist, und mindestens eines zweiten Signals, das für eine Verformung der zweiten Seite der Scheibe in Bezug auf eine zweite Referenzoberfläche repräsentativ ist.

2. Verfahren nach Anspruch 1, wobei der mindestens eine erste Lichtstrahl im Wesentlichen senkrecht zu der Scheibe auf die Scheibe einfällt.

3. Verfahren nach einem der Ansprüche 1 oder 2, wobei:

- der zweite Lichtstrahl auf die erste Seite (A) der Scheibe einfällt und das Verfahren ferner zum Erzeugen des zweiten Messsignals umfasst:

- das Positionieren eines Referenzspiegels, der im Wesentlichen senkrecht zu dem zweiten Lichtstrahl angeordnet wird; und wobei
- der erste Transmissionsstrahl (223) aus einer ersten Transmission der Scheibe durch den zweiten Lichtstrahl, einer Reflexion durch den Referenzspiegel und einer zweiten Transmission der Scheibe durch den von dem Referenzspiegel reflektierten Strahl resultiert; und
- der erste und der zweite Reflexionsstrahl und der erste Transmissionsstrahl durch den ersten Wellenfrontanalysator (240) der Wellenfrontanalysemittel empfangen werden.

4. Verfahren nach Anspruch 3, wobei der erste Lichtstrahl und der zweite Lichtstrahl von der ersten Lichtquelle emittiert werden.

5. Verfahren nach einem der Ansprüche 1 oder 2, wobei:

- der zweite Lichtstrahl auf die erste Seite (A) der Scheibe einfällt;
- der erste Transmissionsstrahl (223, 223a) aus einer ersten Transmission der Scheibe durch den zweiten Lichtstrahl resultiert; und
- der erste Transmissionsstrahl durch einen zweiten Wellenfrontanalysator (240b) der Wellenfrontanalysemittel empfangen wird, der von dem ersten Wellenfrontanalysator verschieden ist.

6. Verfahren nach einem der Ansprüche 1 oder 2, wobei:

- der zweite Lichtstrahl (221b) von einer zweiten Lichtquelle der Emissionsmittel emittiert wird, die von der ersten Lichtquelle verschieden ist, und auf die zweite Seite (B) der Scheibe einfällt;
- der erste Transmissionsstrahl (223b) aus einer ersten Transmission der Scheibe durch den zweiten Lichtstrahl resultiert; und
- der erste Transmissionsstrahl durch den ersten Wellenfrontanalysator (240) der Messanalysemittel empfangen wird.

7. Verfahren nach Anspruch 6, wobei:

- der von der ersten Lichtquelle emittierte erste Lichtstrahl und der von der zweiten Lichtquelle emittierte zweite Lichtstrahl eine unterschiedliche Wellenlänge und/oder Polarisation umfassen; wobei das Verfahren ferner umfasst:

- das Empfangen, durch einen zweiten Wellenfrontanalysator (240b) der Wellenfrontanalysemittel, der von dem ersten Wellenfrontanalysator verschieden ist, eines zweiten Transmissionsstrahls (223a), der aus einer ersten Transmission der Scheibe durch den einfallenden ersten Strahl resultiert, um ein drittes Messsignal zu erzeugen, das für die Wellenfront des zweiten Transmissionsstrahls charakteristisch ist; und
- ein Vergleichen des zweiten Messsignals, das für die Wellenfront des ersten Transmissionsstrahls charakteristisch ist, und des dritten Messsignals, das für die Wellenfront des zweiten Transmissionsstrahls charakteristisch ist, um ein Signal zu erzeugen, das für die Änderungen des Brechungsindex innerhalb der Scheibe charakteristisch ist.

8. System zur Analyse der Oberflächenqualität einer Scheibe mit parallelen Seiten, das System umfassend:

- mindestens einen ersten Halter, der dazu ausgelegt ist, die zu analysierende Scheibe aufzunehmen;
- Emissionsmittel, die mindestens eine erste Lichtquelle zum Emittieren mindestens eines ersten Lichtstrahls mit geringer zeitlicher Kohärenz umfassen, der mindestens eine Wellenlänge aufweist, für welche die Scheibe mindestens teilweise durchlässig ist, wobei die Emissionsmittel dazu ausgelegt sind, dass der mindestens eine erste Lichtstrahl im Betrieb auf die Scheibe einfällt;
- Wellenfrontanalysemittel, die mindestens einen ersten Wellenfrontanalysator (240, 240a) umfassen und dazu ausgelegt sind, im Betrieb:

- auf einer Analyseoberfläche des ersten Wellenfrontanalysators mindestens einen ersten Reflexionsstrahl (222a) und einen zweiten Reflexionsstrahl (222b) zu empfangen, wobei der erste Reflexionsstrahl aus der Reflexion des mindestens einen ersten Lichtstrahls durch eine erste Seite (A) der Scheibe resultiert und wobei der zweite Reflexionsstrahl aus einer ersten Transmission der Scheibe durch den ersten Lichtstrahl, dann einer Reflexion durch eine zweite Seite (B) der Scheibe gefolgt von einer zweiten Transmission der Scheibe resultiert, um ein erstes Messsignal zu erzeugen, das für eine Kombination der Wellenfronten des ersten und des zweiten Reflexionsstrahls charakteristisch ist;
- durch die Wellenfrontanalysemittel mindestens einen ersten Transmissionsstrahl (223, 223a) zu empfangen, der aus mindestens einer ersten Transmission durch die Scheibe eines von den Emissionsmitteln emittierten zweiten Lichtstrahls resultiert, um ein zweites Messsignal zu erzeugen, das für die Wellenfront des Transmissionsstrahls charakteristisch ist;
- eine Verarbeitungseinheit (260), die dazu ausgelegt ist, ausgehend von dem ersten Messsignal und von dem zweiten Messsignal mindestens ein erstes Signal, das für eine Verformung der ersten Seite der Scheibe in Bezug auf eine erste Referenzoberfläche repräsentativ ist, und mindestens ein zweites Signal, das für eine Verformung der zweiten Seite der Scheibe in Bezug auf eine zweite Referenzoberfläche repräsentativ ist, zu berechnen.

9. System zur Analyse nach Anspruch 8, wobei die Emissionsmittel dazu ausgelegt sind, dass im Betrieb der mindestens eine erste Lichtstrahl im Wesentlichen senkrecht zu der Scheibe auf die Scheibe einfällt.

10. System nach einem der Ansprüche 8 oder 9, wobei die Analyseoberfläche des ersten Wellenfrontanalysators im Wesentlichen optisch konjugiert zu der zu analysierenden Scheibe ist.

11. System zur Analyse nach einem der Ansprüche 8 bis 10, umfassend ferner:

- einen zweiten Halter, der dazu ausgelegt ist, einen Referenzspiegel aufzunehmen, wobei der Referenzspiegel im Betrieb im Wesentlichen senkrecht zu dem zweiten Lichtstrahl angeordnet ist; und wobei im Betrieb:

- der erste Transmissionsstrahl (223) aus einer ersten Transmission des mindestens einen ersten einfallenden Lichtstrahls durch die Scheibe, einer Reflexion durch den Referenzspiegel und einer zweiten Transmission durch die Scheibe des von dem Referenzspiegel reflektierten Strahls resultiert; und
- der erste und der zweite Reflexionsstrahl und der erste Transmissionsstrahl durch den ersten Wellenfrontanalysator (240) der Wellenfrontanalysemittel empfangen werden.

12. System zur Analyse nach einem der Ansprüche 8 bis 10, wobei die Wellenfrontanalysemittel einen zweiten Wellenfrontanalysator umfassen, der von dem ersten Wellenfrontanalysator verschieden ist, und:

- die Emissionsmittel dazu ausgelegt sind, dass im Betrieb der zweite Lichtstrahl auf die erste Seite der Scheibe einfällt, wobei der erste Transmissionsstrahl aus einer ersten Transmission der Scheibe durch den zweiten Lichtstrahl resultiert;

- die Wellenfrontanalysemittel dazu ausgelegt sind, dass im Betrieb der erste Transmissionsstrahl durch den zweiten Wellenfrontanalysator der Wellenfrontanalysemittel empfangen wird.

13. System nach einem der Ansprüche 8 bis 12, wobei der mindestens eine erste Wellenfrontanalysator ausgewählt ist aus: einem Hartmann- und Hartmann-Schack-Wellenfrontanalysator, einem Scherinterferometer, einem Moiré-Deflektometer, einer auf der Schlieren-Methode basierenden Vorrichtung.

**Claims**

1. A method for analyzing the surface quality of a substrate with parallel faces (100), comprising:

   - emitting, by at least one first light source (210, 210a) of emission means, at least one first light beam (221) with low temporal coherence, said at least one first light beam being incident on a first face (A) of said substrate, said substrate being at least partially transparent to at least one wavelength of said first light beam;
   - receiving, by at least one first wavefront analyzer (240, 240a) of wavefront analysis means, at least one first reflected beam (222a) and a second reflected beam (222b), said first reflected beam resulting from reflection of said at least one first light beam by said first face (A) of the substrate and said second reflected beam resulting from a first transmission through the substrate of said first light beam and then a reflection by a second face (B) of the substrate, followed by a second transmission through the substrate, in order to generate at least one first measurement signal characteristic of a combination of the wavefronts of said first and second reflected beams; **characterized in that** it comprises
   - receiving, by said wavefront analysis means, at least one first transmitted beam (223, 223a) resulting from at least one first transmission through the substrate of a second light beam emitted by said emission means, in order to generate a second measurement signal characteristic of the wavefront of said transmitted beam;
   - calculating, from said at least one first measurement signal and said second measurement signal, at least one first signal representative of a deformation of said first face of the substrate relative to a first reference surface and at least one second signal representative of a deformation of the second face of the substrate relative to a second reference surface.

2. The method as claimed in claim 1, wherein said at least one first light beam is incident on said substrate in a manner substantially perpendicular to said substrate.

3. The method as claimed in either of claims 1 and 2, wherein:

   - said second light beam is incident on said first face (A) of the substrate and the method further comprises, for the generation of the second measurement signal:
   - positioning a reference mirror, arranged in a manner substantially perpendicular to said second light beam; and wherein
   - said first transmitted beam (223) results from a first transmission through the substrate of said second light beam, a reflection by the reference mirror and a second transmission through the substrate of the beam reflected by the reference mirror; and
   - said first and second reflected beams and said first transmitted beam are received by said first wavefront analyzer (240) of the wavefront analysis means.

4. The method as claimed in claim 3, wherein the first light beam and the second light beam are emitted by said first light source.

5. The method as claimed in either of claims 1 and 2, wherein:

   - said second light beam is incident on said first face (A) of the substrate;
   - said first transmitted beam (223, 223a) results from a first transmission through the substrate of said second light beam; and
   - said first transmitted beam is received by a second wavefront analyzer (240b) of the wavefront analysis means, separate from said first wavefront analyzer.

**6.** The method as claimed in either of claims 1 and 2, wherein:

- said second light beam (221b) is emitted by a second light source of the emission means, separate from the first light source, and is incident on said second face (B) of the substrate;
- said first transmitted beam (223b) results from a first transmission through the substrate of said second light beam; and
- said first transmitted beam is received by said first wavefront analyzer (240) of the measurement analysis means.

**7.** The method as claimed in claim 6, wherein:

- said first light beam emitted by said first light source and said second light beam emitted by said second light source have a different wavelength and/or polarization, the method further comprising:

    - receiving, by a second wavefront analyzer (240b) of the wavefront analysis means, separate from said first wavefront analyzer, a second transmitted beam (223a) resulting from a first transmission through the substrate of said first incident beam, in order to generate a third measurement signal characteristic of the wavefront of said second transmitted beam; and
    - comparing said second measurement signal characteristic of the wavefront of said first transmitted beam and said third measurement signal characteristic of the wavefront of said second transmitted beam, in order to generate a signal characteristic of the variations of the refractive index within the substrate.

**8.** A system for analyzing the surface quality of a substrate with parallel faces, the system comprising:

- at least one first support configured to receive the substrate to be analyzed;
- emission means comprising at least one first light source for emitting at least one first light beam with low temporal coherence, and having at least one wavelength to which said substrate is at least partially transparent, said emission means being configured so that, in operation, said at least one first light beam is incident on said substrate;
- wavefront analysis means comprising at least one first wavefront analyzer (240, 240a) and configured, in operation, for:

    - receiving, on an analysis surface of said first wavefront analyzer, at least one first reflected beam (222a) and a second reflected beam (222b), said first reflected beam resulting from the reflection of said at least one first light beam by a first face (A) of the substrate and said second reflected beam resulting from a first transmission through the substrate of said first light beam and then a reflection by a second face (B) of the substrate, followed by a second transmission through the substrate, in order to generate a first measurement signal characteristic of a combination of the wavefronts of said first and second reflected beams;
    - receiving, by said wavefront analysis means, at least one first transmitted beam (223, 223a) resulting from at least one first transmission through the substrate of a second light beam emitted by said emission means, in order to generate a second measurement signal characteristic of the wavefront of said transmitted beam;
- a processing unit (260) configured for calculating, from said first measurement signal and said second measurement signal, at least one first signal representative of a deformation of said first face of the substrate relative to a first reference surface and at least one second signal representative of a deformation of the second face of the substrate relative to a second reference surface.

**9.** The system as claimed in claim 8, wherein said emission means are configured so that, in operation, said at least one first light beam is incident on said substrate in a manner substantially perpendicular to said substrate.

**10.** The system as claimed in either of claims 8 and 9, wherein said analysis surface of said first wavefront analyzer is substantially optically conjugate with the substrate to be analyzed.

**11.** The system as claimed in any one of claims 8 to 10, further comprising:

- a second support configured for receiving a reference mirror, the reference mirror being arranged, in operation, in a manner substantially perpendicular to said second light beam; and wherein, in operation:

- said first transmitted beam (223) results from a first transmission of said at least one first incident beam through the substrate, a reflection by the reference mirror and a second transmission through the substrate of the beam reflected by the reference mirror; and
- said first and second reflected beams and said first transmitted beam are received by said first wavefront analyzer (240) of the wavefront analysis means.

12. The system as claimed in any of claims 8 to 10, wherein the wavefront analysis means comprise a second wavefront analyzer, separate from the first wavefront analyzer, and:

- said emission means are configured so that, in operation, said second light beam is incident on said first face of the substrate, said first transmitted beam resulting from a first transmission through the substrate of said second light beam;
- said wavefront analysis means are configured so that, in operation, said first transmitted beam is received by said second wavefront analyzer of the wavefront analysis means.

13. The system as claimed in any of claims 8 to 12, wherein said at least one first wavefront analyzer is chosen from among a Hartmann and Shack-Hartmann wavefront analyzer, a lateral shift interferometer, a moiré deflectometer, and a device based on the Schlieren method.

FIG.1 (ART ANTERIEUR)

FIG.2A

FIG.2B

FIG.3A

FIG.3B

FIG.4A

FIG.4B

FIG.4C

FIG.5A

FIG.5B

FIG.6

EP 4 483 138 B1

FIG.7

FIG.8

Face B

Face A

FIG.9

FIG.10A

FIG.10B

EP 4 483 138 B1

FIG.10C

EP 4 483 138 B1

**RÉFÉRENCES CITÉES DANS LA DESCRIPTION**

**Documents brevets cités dans la description**

- WO 2004068088 A
- US 6577403 B
- US 20100310130 A
- US 20050036153 A

**Littérature non-brevet citée dans la description**

- **CRAIG R. FOREST**. *Metrology of thin transparent optics using Shack-Hartmann wavefront sensing*
- **CRAIG R. FOREST et al.** Metrology of thin transparent optics Shack-Hartmann wavefront sensing. *Optical Engineering*, 2004, vol. 43 (3), https://doi.org/10.1117/1.1645256
- Principles and History of Shack-Hartmann. *Journal of Refractive Surgery*, September 2001, vol. 17